# EUROPEAN PATENT SPECIFICATION

(11) **EP 0 466 109 B1**
(45) Date of publication and mention of the grant of the patent: **02.11.1994**
(21) Application number: 91111425.4
(22) Date of filing: 09.07.1991
(51) Int. Cl.: C04B 35/56

(54) **Process for producing a silicon carbide-base complex**
Verfahren zur Herstellung eines Verbundkörpers auf der Basis von Siliziumcarbid
Procédé pour la production d'un complexe à base de carbure de silicium

(30) Priority: 10.07.1990 JP 183641/90; 19.09.1990 JP 251222/90; 19.09.1990 JP 251223/90; 28.09.1990 JP 261599/90; 09.10.1990 JP 271669/90; 08.02.1991 JP 18091/91
(43) Date of publication of application: 15.01.1992
(73) Proprietor: SUMITOMO METAL INDUSTRIES, LTD., Osaka 541 (JP)
(72) Inventor: Arahori, Tadahisa, Katori-gun, Chiba 289-04 (JP); Hayashi, Shigetoshi, Katori-gun, Chiba 289-06 (JP); Minagawa, Kazuhiro, Kawagoe-City, Saitama, 350 (JP)
(74) Representative: TER MEER STEINMEISTER & PARTNER GbR

(56) References cited:
- DE-C- 3 337 949
- PATENT ABSTRACTS OF JAPAN, unexamined applications, C section, vol. 13, No. 326(C 620) (3674), July 24, 1989 THE PATENT OFFICE JAPANESE GOVERNMENT page 46 C620

## Description

The present invention relates to process for producing silicon carbide-base complex, and more particularly to high purity silicon carbide-base complex which is useful as a jig for producing semi-conductor, for example, a heat resistance jig material such as process tube, wafer boat used for heat doping operation, and a process for producing the same. On this occasion, the term "complex" comprehends composites.

### DESCRIPTION OF THE RELEVANT ART

In the past, silica glass has been used as the heat resistance jig for producing semiconductor required a high purity. The silica glass has several merits, for example, we can produce a extremely high purity jig easily by using it, and we can observe its inside easily because of transparence.

The silica glass-made jig, however, has also several demerits, for example, we can hardly use it for heat treatment at a temperature of 1150 °C or more because of starting to change its dimension at 1000 °C due to viscous flow, and it has a short life because of changing to α - cristobalite caused it to be lost transparency, to be broken.

In recent years, a complex produced by charging porous silicon carbide molding molded from a silicon carbide powder with metallic silicon, has been developed as a material which can solves above-mentioned demerits instead of silica glass, has been used as the heat resistance jig for producing semiconductor.

E.G. Acheson has been considered to discover silicon carbide in 1981. Acheson method, which silicon carbide is synthesized by means of carbothermic reduction with silica rock and coke, has been known as a first industrial method for producing silicon carbide. This reaction is shown as the following formula (1):

SiO₂ + 3C → SiC + 2CO (1)

In recent years, in the process of producing semi-conductor such as LSI, the use of a heat resistance material mainly composed of silicon carbide are showing a tendency to increase for a reactor core tube and a wafer supporting material when silicon wafer is heat-treated in the range of above 1100 °C. On the other hand, an influence of a trace of impurities comprised in the reactor core tube and the wafer supporting material has become a problem with high integration of LSI.

In Acheson method described above, the silicon carbide material is produced by means of mixing silicon source such as quarts sand, crystal powder and colloidal silica with carbon source such as coke, tar pitch and carbon black, and sintering this mixture. As a result, the silicon carbide material comes to contaminate of between several ten ppm and several % caused by metallic impurities comprised in the silicon source and the carbon source, and also caused from container, jig, atmosphere in the steps of mixing, molding, sintering, etc.

Further, the silicon carbide-base material is inadequate for heat resistance material of semiconductor in case of using the contaminated silicon carbide-base material powder, even though the silicon carbide-base material is produced densely by means of silicon impregnation method without sintering assistant.

According to severe demands to obtain a high purity silicon carbide material, it has industrialized the process for producing the silicon carbide material powder by means of vapor phase synthesis. The silicon impregnation method, which comprised the steps of sintering the high purity silicon carbide material powder and producing a dense silicon carbide-base material without sintering assistant, has disclosed in Japanese Patent Laid-Open Publication No. 43553/82.

In Acheson method, as described above, since quarts sand, and crystal powder and colloidal silica are used as silicon source, and coke, tar pitch and carbon black are used as carbon source, the silicon carbide material comes to contamination of from several ten ppm to several % caused by metallic impurities comprised in the silicon source and the carbon source, and also caused from container, jig, atmosphere in the steps of mixing, molding, sintering, etc. Therefore, it is difficult to synthesize the high purity silicon carbide-base material.

In addition, a method comprising the step of heating metallic silicon at a temperature its melting point or more and impregnating melted silicon has been used generally (Japanese Patent Laid-Open Publication No. 85374/76, No. 14914/89, No. 115888/89). Also, a method comprising the step of evaporating silicon by means of induction heating of graphite molding, impregnating silicon to the silicon carbide body, has been disclosed (Japanese Patent Laid-Open Publication No. 43553/82).

A method comprising the step of producing a dense silicon carbide membrane on surface of silicon carbide material by means of vapor deposition of silicon carbide, the membrane inhibits impurity diffusion, has been disclosed.

The silicon carbide-base material being used for producing semiconductor, has been produced by means of purifying treatment after molding and sintering. However, not only the material is contaminated at the step of these complex process for producing it, but it is also removed impurities from only surface because purifying treatment is performed after sintering. As a result, in case that the silicon wafer is heat-treated with the silicon carbide-base material-made jig produced by above-mentioned method, the jig may contaminate the silicon wafer because of diffusional release of impurities such as Fe in the material composed of silicon carbide.

Also, according to a method comprising the step of impregnating silicon carbide body with melted metallic silicon, large energy is required to rise a temperature to above 2000 °C, and a thermal deformation and crack may be induced to the silicon carbide body by thermal shock.

According to the method which comprises producing the dense silicon carbide membrane on surface of the silicon carbide material by means of vapor deposition of silicon carbide, and in which the membrane inhibits impurities diffusion, the silicon carbide-base material, produced by means of the above-mentioned method, induces pin-holes on its surface and cracks by mechanical or thermal shock because of a low sticking strength of the membrane.

Moreover, the silicon carbide-base material comes to contamination from container, jig, and atmosphere in the steps of keeping the silicon carbide material powder, molding the silicon carbide powder, or sintering this molding, even though the synthesized high purity silicon carbide material powder produced by means of vapor phase synthesis is used. Therefore, it is difficult to produce the extremely high purity silicon carbide-base complex for producing semi- conductor.

Only in the case of forming a dense silicon carbide thick film directory on a high purity graphite molding or a high purity silica glass-made molding, it is possible to produce a high purity silicon carbide-base complex. However, according to the above-mentioned method, it still has a problem to solve because of slow growth reaction of the silicon carbide, expensive for producing, and breaking the silicon carbide-base material due to a difference of thermal expansion coefficient between a silicon carbide and graphite and silica glass as base material.

The silicon carbide powder being used for heat resistance ceramics material have a high purity and a high degree of sintering, and have been required to be supplyed as fine particles. In addition, the silicon carbide materials being used for a jig for producing semiconductor have been required to have a high purity and not to contaminate silicon wafer.

In the past, a silicon carbide powder has been produced by a method which comprises crashing α -type silicon carbide produced by means of Acheson method, and then pass it through a sieve (Japanese Patent Laid-Open Publication No. 84013/78).

In order to obtain a dense sintered molding using the silicon carbide powder produced by above-mentioned method, sintering temperature is required extremely high temperature, because the silicon carbide powder produced by above-mentioned method is α -type silicon carbide which stabilizes under high temperature, and dose not accompanies transformation and dislocation of crystal-type at sintering, and its sintering speed is slow. Also, this silicon carbide powder can not be used for producing semiconductor because of some contaminant caused by the step of crashing and by material such as quarts sand and coke. In addition, the impurities which the silicon carbide powder is including causes breaking as well as a strength scattering of sintered molding.

Contrarily, a method, which produces β -type silicon carbide particles by means of vapor phase reaction with silicon halide, silicon carbide, etc., has been disclosed in Japanese Patent Laid-Open Publication No. 160200/75. Moreover, a method, to produce a high purity β-type silicon carbide by means of pyrolysis of an organic silicon compound, has been disclosed in Japanese Patent Laid-Open Publication No. 67599/79.

However, according to the former of the above-mentioned method, there is the possibility of contaminating the silicon carbide particles with metal halide gas, which is formed in the step by a hydrohalide gas corroding the tube because a corrosive hydrohalide gas exists as by-product in this reaction system.

In addition, according to the latter of the above-mentioned method, it is required to remove free carbon by means of sintering under an oxidizing atmosphere because of remaining free carbon in the vapor phase a part of the organic silicon compound or as a condition of pyrolysis.

Further, because it is required to separate and recover the silicon carbide powder deposited from the vapor phase, the silicon carbide powder causes a lowering of the yield and a contamination.

### SUMMARY OF THE INVENTION

In view of the situation mentioned above it is therefore an object of this invention to provide a process for producing a silicon carbide-base complex, which is useful as a material for producing a semiconductor jig which does not deform under high temperature, and which has a high purity and does not contaminate the wafer at the doping operation of the silicon wafer.

It is another object of this invention to provide a process for producing a high purity silicon dioxide-carbon complex produced from the silicon source of a high purity porous synthesized silica glass body.

It is a further object of the present invention to provide a process for producing a silicon carbide tube, which is useful as a high purity material for producing semiconductors with a simple process and at low costs, and which is produced from an extremely high purity porous synthesized silica glass body deposited on the inside and on the outside surface of a high purity graphite pipe or silica glass-made pipe as silicon source.

It is an additional object of the present invention to provide a process for producing a jointed silicon carbide molding which has a high purity, a complex configuration and a large size, and which can be used for producing semiconductors.

It is a further object of the present invention to provide a process for producing a dense silicon dioxide-carbon complex and a dense silicon dioxide-silicon carbide complex which can be used as a high purity heat resistance material, at relatively low costs in the step of producing semiconductors.

It is still another object of this invention to provide a process for producing a high purity silicon carbide powder which can be produced easily and in a good yield, and which is useful as a heat resistant ceramic molding material.

These objects are obtained by the processes of the present invention.

Subject matter of the present invention therefore is a process for producing a silicon carbide-base complex, comprising the step of:
depositing carbon produced by means of pyrolysis of a gas comprising a hydrocarbon and/or a hydrocarbon halide in a porous synthesized silica glass body.

Further embodiments of the present invention comprise the following:
A process for producing a silicon dioxide-carbon complex, comprising the step of:
depositing carbon produced by means of pyrolysis of a gas comprising a hydrocarbon and/or a hydrocarbon halide in a porous synthesized silica glass body so as to provide a mole ratio of carbon to silicon dioxide of 3 or more.

The process as defined above, wherein the pyrolysis temperature used is from the decomposition temperature of the hydrocarbon or the hydrocarbon halide gas to 1400°C.

A process for producing a silicon carbide-base complex, comprising the step of:
heat-treating the silicon dioxide-carbon complex of the process as defined above, at a temperature of from 1600°C to 2500°C.

A process for producing a silicon carbide material, comprising the steps of:
depositing carbon produced by means of pyrolysis of a gas comprising a hydrocarbon and/or a hydrocarbon halide in a porous synthesized silica glass body,
heat-treating the same to obtain a porous molding, and
charging the pores of said porous molding with metallic silicon.

The process as defined above, wherein the mole ratio of carbon deposited in the porous synthesized silica glass body to silicon dioxide is 3 or more.

The process as defined above, wherein the process further comprises the steps of:
reacting excess carbon existing in the porous molding with the charged metallic silicon.

The process as defined above, wherein the charging of the pores of the porous molding with metallic silicon is achieved by means of infiltration of molten silicon.

The process as defined above, wherein the charging of the pores of the porous molding with metallic silicon is achieved by means of pyrolysis of a gas including silicon.

A process for producing a silicon carbide tube, comprising the steps of:
forming a porous body of silica glass by means of vapor phase synthesis on the surface of a tubular material,
depositing carbon produced by means of pyrolysis of a gas comprising a hydrocarbon and/or a hydrocarbon halide in the porous body of silica glass so as to provide a mole ratio of carbon to silicon dioxide of 3 or more and heat-treating the same.

The process as defined above, wherein the heat-treating temperature is from 1600°C to 2500°C.

The process as defined above, wherein the process further comprises the step of:
charging the porous silicon carbide tube with metallic silicon.

A process for producing a silicon carbide-base complex, comprising the steps of:
joining a synthesized silica glass porous body at the plane to join,
depositing carbon produced by means of pyrolysis of a gas comprising a hydrocarbon and/or a hydrocarbon halide in said porous body and said plane so as to provide a mole ratio of carbon to silicon dioxide of 3.5 or more,
heat-treating the same to obtain a porous silicon carbide molding, and
charging said porous silicon carbide molding with metallic silicon.

A process for producing a silicon carbide-base complex, comprising the steps of:
depositing carbon produced by means of pyrolysis of a gas comprising a hydrocarbon and/or a hydrocarbon halide in a porous synthesized silica glass body so as to provide a mole ratio of carbon to silicon dioxide of 3.5 or more to obtain a porous silicon dioxide-carbon molding,
joining said porous molding at the plane to join, heat-treating the same to obtain porous silicon carbide molding, and
charging said porous silicon carbide molding with metallic silicon.

A process for producing a silicon carbide-base complex, comprising the steps of:
depositing carbon produced by means of pyrolysis of a gas comprising a hydrocarbon and/or a hydrocarbon halide in a porous synthesized silica glass body so as to provide a mole ratio of carbon to silicon dioxide of 3.5 or more,
heat-treating the same to obtain a porous silicon carbide molding,
joining said porous silicon carbide molding at the plane to join, and
charging the same with metallic silicon.

A process for producing a silicon dioxide-carbon complex, comprising the steps of:
depositing carbon produced by means of pyrolysis of a gas comprising a hydrocarbon and/or a hydrocarbon halide in a porous synthesized silica glass body so as to provide a mole ratio of carbon to silicon dioxide of 1 or less to obtain a porous silicon dioxide-carbon complex, and
making the same dense by means of heat-treating at a temperature of from 1200°C to 1600°C.

A process for producing a silicon dioxide-silicon carbide complex, comprising the steps of:
depositing carbon produced by means of pyrolysis of a gas comprising a hydrocarbon and/or a hydrocarbon halide in a porous synthesized silica glass body so as to provide a mole ratio of carbon to silicon dioxide of 1 or less to obtain a porous silicon dioxide-carbon complex, and
generating silicon carbide by means of a heat treatment of the same at a temperature of from 1600°C to 2000°C.

A process for producing a silicon dioxide-silicon carbide complex tube, comprising the steps of:
forming a porous body of silica glass by means of vapor phase synthesis on the surface of a tubular material,
depositing carbon produced by means of pyrolysis of a gas comprising a hydrocarbon and/or a hydrocarbon halide in the porous body of silica glass so as to provide a mole ratio of carbon to silicon dioxide of 1 or less, and
heat-treating the same at a temperature of from 1600°C to 2000°C.

A process for producing a silicon carbide powder, comprising the steps of:
depositing carbon produced by means of pyrolysis of a gas comprising a hydrocarbon and/or a hydrocarbon halide in a porous synthesized silica glass body so as to provide a mole ratio of carbon to silicon dioxide of from 1 to 3, and
heat-treating the same at a temperature of from 1600°C to 2500°C.

These and other objects of the invention will be readily understood from the following description, taken in connection with the accompanying drawings.

### BRIEF DESCRIPTION OF THE DRAWINGS

Fig. 1 is a graph showing the calculated result of the standard free energy in the reaction of formula (1).

Fig. 2 is a graph showing the relationship between the heat-treating temperature and the range in which the silicon carbide forms.

Fig. 3 is a graph showing the relationship between the heat-treating temperature and the range in which the silicon carbide forms.

### DETAILED DESCRIPTION OF THE INVENTION

Initially, we refer now to a process for producing a silicon dioxide-carbon complex and a silicon carbide complex.

A vapor phase synthesis technique named generically Soot method which includes MCVD (Modified Chemical Vapor Deposition) method, OVD (Outside Vapor Deposition) method, VAD (Vapor-phase Axial Deposition) method etc. has been developed, and made practicable in order to produce optical fiber as a method for producing a extremely high purity synthesized silica glass. According to this method, the synthesized silica glass has been known to include only 1 ppm or less of metallic elements impurity.

A process for producing a porous silica glass body produced by means of vapor phase synthesis comprises the steps of:
vaporizing silicon chloride such as silicon tetrachloride,
hydrolysis as the following formula (2) under oxidizing atmosphere such as in a flame, or oxidizing as the following formula (3) to obtain a silicon dioxide particle,
sedimentation of the silicon dioxide particle,

SiCl₄ + 2H₂O→ SiO₂ + 4HCl (2)

SiCl₄ + O₂→ SiO₂ + 2Cl₂ (3)

There are other methods for producing the porous silica glass body as follows:

### ① Sol-Gel Method:

This method is referred to hydrolysis of alkoxy silane such as TEOS (tetraethoxy silane: Si(OC₂H₅)₄), and the porous silica glass body is produced by drying reaction products after reacting in liquid phase, but the purity is lower than by VAD method's.

### ② Phase splitting method:

This method is comprising the step of heat-treating borosilicate glass, phase-separating in B₂O₃ glass and SiO₂ glass, eluting only B₂O₃ by acid. According to this method, a porous silicon dioxide glass, called vycor glass, can be obtained in a 96% purity.

The porous synthesized silica glass body by means of above vapor phase synthesis can avoid being contaminated by metallic impurities, which is formed by corrosion of reactor, because of separating halogen gas such as HCl, Cl₂ from the particle at the step of sedimentation of the silicon dioxide particle, and comes to extremely high purity.

Then, 100 µm or less is favorable to particle diameter of the porous silica glass body in this step. Because the aimed silicon dioxide-carbon complex or silicon carbide are not obtained, even though particle having more than 100 µm diameter are covered by carbon by means of depositing. In case of using a extremely high purity porous synthesized silicon dioxide as a silicon carbide in the vapor phase synthesis showing formula (1), asilicon dioxide-carbon complex, which is similar to microscopical mixture of silicon dioxide and carbon, is obtained by the steps of heat-treating the porous silicon dioxide under an atmosphere comprising hydrocarbon gas or hydrocarbon halide gas, and depositing carbon homogeneously over inside of the porous silicon dioxide. Moreover, a high purity porous silicon carbide can be obtained by heat-treating the silicon dioxide-carbon complex.

Hydrocarbon gas is, for example, such as CH₄, C₂H₆, C₃H₈, C₄H₁₀, C₂H₄,C₂H₂, C₆H₆, and hydrocarbon halide gas is such as CH₃Cl,CH₂Cl₂, CHCl₃, C₂H₄Cl₂, C₂H₃Cl₃, C₂H₃Cl, C₂H₂Cl₂, C₂HCl₃, C₆H₅Cl. A carbon is not deposited at a decomposition temperature or less of hydrocarbon gas or hydrocarbon halide gas, and can not be deposited over inside of porous synthesized silica glass body at a temperature of 1400 °C or more because of becoming dense. Therefore, it is necessary to regulate the temperature of depositing carbon of from the decomposition temperature of hydrocarbon or hydrocarbon halide gas to 1400 °C. In addition, a silicon carbide having the stoichiometric ratio and a silicon carbide complex having excess carbon are obtained by control of carbon depositing. The mole ratio of carbon to silicon dioxide is 3 or more preferably to obtain a silicon carbide molding after heat-treating.

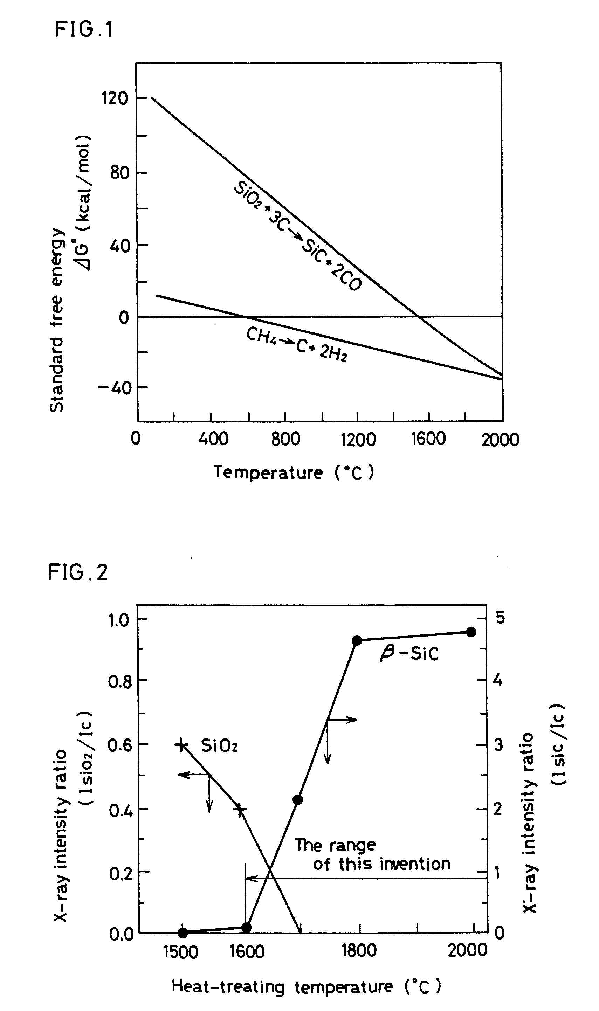

A heat-treating temperature to obtain the silicon carbide from silicon dioxide-carbon complex, as the result of thermodynamic calculation illustrated in fig.1, is about 1600 °C or more, at which standard free energy (ΔG) comes to negative value on formula (1). In addition, since a heating system which achieves actually above 2500 °C of heat-treating temperature is impractical, the heat-treating temperature to produce the silicon carbide is preferable from 1600 °C to 2500 °C. As a result, it is possible to control a porosity of the porous silicon carbide synthesized by means of the above method, according to control of the porosity of porous synthesized silica glass body by means of heat treatment.

Moreover, a high purity silicon carbide powder can be obtained by milling the porous silicon carbide.

According to the above method, a extremely high purity porous silicon carbide is produced by the steps of heat-treating of a high purity porous synthesized silica glass body under an atmosphere comprising hydrocarbon gas or hydrocarbon halide gas, depositing carbon homogeneously over inside of porous body to obtain a silicon dioxide-carbon complex, and heat-treating the same, in the cause of a high purity starting material, the steps without mixing and molding.

Thus, we refer to a process for producing a silicon carbide material, according to this method, it is necessary to use a high purity porous synthesized silica glass body, which is composed of silicon dioxide particle having the range of 0 .01 ∼ 10 µm average particle diameter, 40 ∼ 80 % porosity, and 1 ppm or less of impurities. And it is not contaminated because this porous synthesized silica glass body is produced without the steps of mixing with binder, molding such as press. And it is molded into the configuration of final product, as a starting material for this method..

Further, according to this invention, A carbon having several ten nm particle diameter is deposited on the surface of the porous synthesized silica glass body inside composed of silicon dioxide particle, by means of heat-treating under an atmosphere of hydrocarbon gas or hydrocarbon halide gas, for example, comprising at least one gas among CH₄, C₂H₆, C₃H₈, C₄H₁₀, C₂H₄, C₂H₂, C₆H₆, CH₃Cl, CH₂Cl₂, CHCl₃, C₂H₄Cl₂, C₂H₃Cl₃, C₂H₃Cl, C₂H₂Cl₂, C₂HCl₃, C₆H₅Cl, etc. at a temperature of from decomposition temperature of the used hydrocarbon gas or hydrocarbon halide gas to 1400 °C. If this temperature is less than decomposition temperature of the used hydrocarbon or hydrocarbon halide gas, the carbon can not be deposited, and if this temperature is 1400 °C or more, the carbon can not be deposited over inside because of becoming dense at a temperature of 1400 °C or more.

In addition, 3 or more of the mole ratio of carbon to silicon dioxide is necessary, silicon dioxide comprised in base material, the porous synthesized silica glass body. The reaction of silicon dioxide with carbon proceeds by the following reaction:

SiO₂ + 3C → SiC + 2CO (1)

Therefore, the carbon deposition with less than 3 of the mole ratio of carbon to silicon dioxide causes the porous body to lowe the strength be powdered and be broaken, because of remaining excess silicon dioxide, and vaporizing the silicon dioxide at heat treatment.

On the other hand, in case of remaining the excess carbon in the porous silicon carbide material, the excess carbon reacts with metallic silicon easily by impregnation of metallic silicon, and becomes silicon carbide.

In next step, the synthesized silica glass-carbon complex is heat-treated at a temperature of from 1600 to 2500 °C under non-oxidizing atmosphere, for example, comprising at least one gas among helium, neon, argon, hydrogen, etc. or under a vacuum so that a particle of silicon dioxide is reduced extremely rapidly by a super fine particle of pyrolytic carbon, and becomes completely the silicon carbide. On this occasion, if heat-treating temperature is lower than 1600 °C, the silicon dioxide does not react on carbon, and a heating system which can raise temperature more than 2500 °C is impractical in factories. Therefore, heat-treating temperature is preferable from 1600 °C to 2500 °C.

In next step, the porous molding comes to dense by means of impregnating this porous molding with melting metallic silicon. Then, it is preferable to keep a condition of reduced pressure in reactor, in order to be impregnated rapidly with melting silicon. Also, it is necessary to keep temperature from melting point to uneasy point of evaporation of metallic silicon in the reactor.

Instead of the impregnating in the above-mentioned step, pyrolysis is adopted. Namely, the porous compact comes to dense by means of heat-treating under an atmosphere comprising silicon, for example, at least one gas among SiCl₄, SiHCl₃, SiH₄, etc., at temperature of from decomposition temperature of the used gas to 2000 °C, and depositing metallic silicon on the porous molding. Then, hydrogen, argon, etc. may be used for carrier gas. If this temperature is less than decomposition temperature of the used gas, metallic silicon does not deposit. If this temperature is more than 2000°C, it require large energy and causes heterogeneous deposition to the surface of porous molding. Therefore, heat treatment temperature for pyrolysis temperature is more preferable from 600 °C to 1200 °C according to the used gas.

In both of the above-mentioned steps, in other words, in the steps of impregnating and pyrolysis, since the excess carbon which exists in the porous molding is fine particle in several ten nm diameter, and reacts easily with the melting silicon, the gas comprising silicon or deposited metallic silicon. As a result, the strength of the silicon carbide material improves.

The synthesized silica glass produced by means of vapor phase synthesis such as Soot method can deposit carbon on the inside of its porous body by heat treatment under an atmosphere comprising carbon source gas, because of porousness, and has extremely high purity with only 1 ppm or less of total metallic impurities.

In case that the carbon is deposited on a porous synthesized silica glass body so as to become 3 or more of the mole ratio of carbon to silicon dioxide, the silicon dioxide does not stay in the porous body, thereby avoiding vaporizing silicon dioxide gas at heat treatment. Therefore, breaking of porous body, lowering the strength and powdering are not occur.

Moreover, a extremely high purity porous silicon carbide molding and the porous silicon carbide-carbon molding are obtained by heat-treating the silicon dioxide-carbon complex produced by means of above-mentioned heat-treating.

In the next step, a dense silicon carbide material produced easily by means of heating the porous molding at a temperature of melting point of metallic silicon or more, and allowing to react the porous molding with melting silicon by dipping under a vacuum, and the porosity become almost zero.

Instead of the use of melting silicon in the above-mentioned step, pyrolysis is adopted. Namely, the porous molding can come to dense by means of heat treating under an atmosphere comprising silicon, and depositing metallic silicon on the porous molding. Then, if there are excess carbon in the porous molding, the carbon reacts rapidly with metallic silicon, becomes silicon carbide. As a result, its strenght of the silicon carbide material improves. According to the above-mentioned methods, it is possible to omit the essential steps in the previous methods, such as milling material, mixing, molding to avoid contaminating from these steps, and to obtain a extremely high purity silicon carbide material.

Then, we refer to a process for producing a silicon carbide tube and a silicon dioxide-silicon carbide complex tube.

As previously described, a vapor phase synthesis technique named generically Soot method which includes MCVD (Modified Chemical Vapor Deposition) method, OVD (Outside Vapor Deposition) method, VAD (Vapor-phase Axial Deposition) method etc. has been developed, and made practicable to produce optical fiber.

OVD method is comprising the step of depositing a synthesized silica glass particle on the outside of starting material such as tube material or stick material, and MCVD method is comprising the step of depositing a synthesized silica glass particle on the inside of starting material such as tube material, thereby producing a cylindrical porous synthesized silica glass base material efficiently. According to OVD method or MCVD method, it is possible to produce a high purity silicon carbide-base material because contamination from handling in the step of molding is avoided due to make the silicon carbide material from silicon source such as silicon dioxide directly without molding step. It is preferable to use a high purity silica glass-made pipe, graphite pipe, etc. as starting tubular substrate.

A porous silica glass body synthesized by means of vapor phase synthesis comprises the steps of:
vaporizing silicon chloride such as silicon tetrachloride,
hydrolysis shown by the following formula (2) under oxidizing atmosphere such as in a flame, or oxidizing shown by the following formula (3) to obtain a silicon dioxide particle,
sedimentating the silicon dioxide particle.

SiCl₄ + 2H₂O→ SiO₂ + 4HCl (2)

SiCl₄ + O₂→ SiO₂ + 2Cl₂ (3)

The porous synthesized silica glass body by means of the above vapor phase synthesis can avoid being contaminated by metallic compounds, which is formed by corrosion of reactor, because of separating halogen gas such as HCl, Cl₂ from the particle at the step of sedimentation of the silicon dioxide particle, and comes to extremely high purity.

As the result of our research, in consideration of depositing carbon homogeneously in the porous synthesized silica glass body by means of heat treating the porous synthesized silica glass body under an atmosphere comprising high purity hydrocarbon gas or hydrocarbon halide gas, we have found that a extremely high purity porous silicon carbide pipe can be synthesized by means of heat-treating pipe-shaped silicon dioxide-carbon complex obtained by the above-mentioned heat treatment, in the cause of using a high purity starting material, and without the steps of mixing and molding.

Also, we have found that a dense silicon carbide pipe is produced easily by means of heat treating a porous silicon carbide pipe up to melting point of silicon, allowing to react with melting silicon by dipping under reduced pressure and heat-treating, or by means of heat treating under an atmosphere comprising at least one gas such as SiCl₄, SiHCl₃, SiH₄ at a temperature of from decomposition temperature of the used gas to 2000 °C.

In the case of using the extremely high purity porous pipe-shaped silica glass body as a silicon dioxide in the vapor phase synthesis showing formula (1), a silicon dioxide-carbon complex, which is similar to microscopical mixture of silicon dioxide and carbon, is obtained by the steps of heat-treating the porous pipe-shaped body under an atmosphere comprising hydrocarbon gas or hydrocarbon halide gas, and depositing carbon homogeneously over inside of the porous body. Moreover, a high purity porous silicon carbide pipe can be obtained by heat-treating the pipe-shaped complex.

Hydrocarbon gas is, for example, such as CH₄, C₂H₆, C₃H₈, C₄H₁₀, C₂H₄, C₂H₂, C₆H₆, and hydrocarbon halide gas is such as CH₃Cl, CH₂Cl₂, CHCl₃, C₂H₄Cl₂, C₂H₃Cl₃, C₂H₃Cl, C₂H₂Cl₂, C₂HCl₃, C₆H₅Cl. A carbon is not deposited at less than a decomposition temperature of hydrocarbon gas or hydrocarbon halide gas, and can not be deposited over inside of porous synthesized silica glass body at a temperature of 1400 °C or more because of becoming dense Therefore, it is necessary to regulate the temperature of depositing carbon between the decomposition temperature of hydrocarbon gas or hydrocarbon halide gas to 1400 °C. In addition, a silicon dioxide-carbon complex having the various mole ratio of carbon to silicon dioxide is obtained by means of control carbon depositing condition.

A heat-treating temperature to obtain the silicon carbide from silicon dioxide-carbon complex, as the result of thermodynamic calculation illustrated in fig.1, is about 1600 °C or more, at which standard free energy (ΔG) comes to negative value on formula (1). In addition, since a heating system which achievs actually above 2500 °C of heat-treating temperature is impractical, the heat-treating temperature to produce silicon carbide is preferable from 1600 °C to 2500 °C.

Since the silicon carbide produced by the above method is difficult to sinter, and dose not become dense such as silica glass, it is impossible to keep porous configuration without excess carbon. Therefore, it is necessary to supply 3 or more of the mole ratio of carbon to silicon dioxide to obtain the porous silicon carbide pipe.

Then, if heat-treating temperature is more than 2000 °C, the synthesized silica glass used for base material can allow to vaporize as silicon oxide.

In the above-mentioned method, the synthesized silica glass base material can be also dissipated by hydrogen fluoride, and graphite substrate can be also dissipated by means of heating under oxidizing atmosphere.

Also, it is possible to control the porosity of the porous silicon carbide synthesized by means of temperature control of sedimentation plane, or control of a porosity of the porous synthesized silica glass body by heat treatment.

In the last step, the dense silicon carbide pipe can be obtained by means of impregnating with melting high purity silicon. Then, it is prefer to keep reduced pressure in reactor in order to infiltrate melting silicon to inside of porous body rapidly, and also a temperature in reactor is from melting point to uneasy point of evaporation of silicon.

The excess carbon and silicon composing the porous body react and become the silicon carbide by means of infiltrating melting silicon to inside of the porous silicon carbide pipe body, as the following formula (4):

Si + C → SiC (4)

Instead of impregnating in the above-mentioned step, pyrolysis is adopted. Namely, the heat-treated pipe comes to dense by means of heat-treating under an atmosphere comprising silicon source gas, for example, at least one gas among SiCl₄, SiHCl₃, SiH₄, etc. at a temperature of from decomposition temperature of the used gas to 2000 °C, depositing metallic silicon over inside of the porous silicon carbide pipe. Then, hydrogen, argon, etc. may be used for carrier gas. If this heat-treating temperature is decomposition temperature of the used gas or less, metallic silicon does not deposit. If heat-treating temperature is more than 2000°C, it require large energy and causes heterogeneous deposition to the surface. Therefore, heat-treating temperature is more preferable from 600 °C to 1200 °C according to used gas.

In both of the above-mentioned steps, since the excess carbon which exists in the silicon carbide pipe is extremely fine particle in several ten nm diameter, the excess carbon reacts easily with the melting silicon, the gas comprising silicon or deposited metallic silicon, and becomes silicon carbide. As a result, the strength of the silicon carbide material improves.

Further, in case that the mole ratio of carbon to silicon dioxide of pipe-shaped silicon dioxide-carbon complex is 1 or less, and that heat-treating temperature is from 1600 °C to 2000 °C, the reaction, as described above formula (4), proceeds and heat-treating is promoted by viscous flow of a excess silica glass, thereby the dense pipe-shaped silicon dioxide-silicon carbide complex is obtained. Then, if the mole ratio of carbon to silicon dioxide is from 1 to 3, it is impossible to keep its porous configuration because a deposited carbon inhibits viscous flow of silica glass, thereby the pipe-shaped silicon dioxide-carbon complex dose not become dense, and silicon carbide powder is formed. Therefore, it is necessary to keep it in 1 or less of the mole ratio of carbon to silicon dioxide to obtain a dense pipe-shaped silicon dioxide-silicon carbide complex, and also necessary to keep heat-treating temperature at less than 2000 °C, at which the silica glass starts vaporizing.

According to the above-mentioned method, a extremely high purity porous silicon carbide pipe is produced by the steps of heat-treating a high purity pipe-shaped porous synthesized silica glass body under an atmosphere comprising hydrocarbon gas or hydrocarbon halide gas, depositing carbon homogeneously over inside of pipe-shaped porous synthesized silica glass body so as to become 3 or more of the mole ratio of carbon to silicon dioxide, and heat-treating the same at a temperature of from 1600 °C to 2500 °C, in the cause of a high purity starting material, the steps without mixing and molding.

Further, a dense silicon carbide pipe is produced easily by means of heating a porous silicon carbide pipe above-mentioned with a high purity silicon up to melting point of silicon under reduced pressure, and allowing to infiltrate melting silicon in to inside of the porous body.

Instead of the above-mentioned impregnating of melting silicon, pyrolysis is adopted. Namely, the porous silicon carbide pipe comes to dense by means of heat treating under atmosphere comprising silicon gas at a temperature of from decomposition temperature of the used gas to 2000 °C, depositing metallic silicon in the porous molding.

Still further, the extremely high purity and dense pipe-shaped silicon dioxide-silicon carbide complex is obtained, by similar reason above-mentioned, when the pipe-shaped silicon dioxide-carbon complex having 1 or less of the mole ratio of carbon to silicon dioxide is heat-treated at a temperature of from 1600 °C to 2000 °C.

Then, we refer to a process for producing a jointed silicon carbide molding, the synthesized silica glass produced by means of vapor phase synthesis such as Soot method can be deposited carbon over its porous body by heat treatment under an atmosphere comprising carbon source gas because of porous. Therefore, the high purity dense silicon carbide material is produced by means of heat-treating the porous body deposited carbon, and impregnating metallic silicon.

However, since it is difficult to process the porous synthesized silica glass base material into large-sized and complex products, it is necessary to join processed synthesized silica glass base materials.

According to this invention, in order to produce large-sized and complex products by means of joining, the steps are comprising of joining the processed synthesized silica glass porous body produced by vapor phase synthesis at the plane to join, heat-treating under an atmosphere comprising at least one gas of hydrocarbon or hydrocarbon halide such as CH₄, C₂H₆, C₃H₈, C₄H₁₀, C₂H₄, C₂H₂, C₂H₄Cl₄, C₂H₃Cl₃, C₂H₃Cl, C₂H₂Cl₂, etc. at a temperature of from decomposition temperature of the used gas to 1400 °C, and depositing carbon in the porous body. Then, the silicon carbide is produced as showing formula (1). Therefore, it is necessary to deposit carbon so as to become 3 of the mole ratio of carbon to silicon dioxide, actually carbon is deposited so as to become 3.5 of the mole ratio due to joining silicon carbide after depositing excess carbon at the plane to join. In case that the mole ratio is 3.5 or less, the junction strength at a high temperature comes to be insufficiency because the junction at the plane becomes mainly silicon junction.

In next step, the porous silicon carbide molding joined at the plane, which comprises silicon carbide and and excess carbon, is obtained by means of heat-treating the porous silicon dioxide-carbon molding at a temperature of from 1600 °C to 2500 °C. Then, the porous silicon carbide molding comes to solid joining body by means of impregnating with melting metallic silicon, and reacting excess carbon with silicon at the plane, becoming silicon carbide.

According to the above-mentioned method, the joining body without interface is obtained, but in case of relatively large-sized joining body, the difference of carbon concentration between surface and inside of the body occurs, and homogeneous deposition of carbon may be not achieved at depositing operation of carbon produced from hydrocarbon gas or hydrocarbon halide gas. Then, a method comprising of depositing carbon on the porous synthesized silica glass body before, joining porous silicon dioxide-carbon molding at the plane to join, heat-treating the same, charging with metallic silicon, is effective in order to obtain the relatively large-sized products.

Also, porous the silicon carbide molding comes to solid joining body by means of depositing carbon in the the porous synthesized silica glass body before, heat-treating the same, joining the porous silicon carbide molding at the plane to join, and charging with silicon.

According to the above-mentioned method, the joining part comes to have the same formation with the silicon carbide base material part, and the high junction strength is achieved at high temperature as well as at room temperature because the difference of thermal expansion coefficient between the base material and the joining part are almost noting, unlike usual junction by only metallic silicon.

Then, we refer to a process for producing a silicon dioxide-carbon complex and a silicon dioxide-silicon carbide complex.

As previously described, a vapor phase synthesis technique named generically Soot method which includes MCVD (Modified Chemical Vapor Deposition) method, OVD (Outside Vapor Deposition) method, VAD (Vapor-phase Axial Deposition) method etc. has been developed, and made practicable to produce optical fiber.

A process for producing a porous silica glass body by means of vapor phase synthesis comprises the steps of : vaporizing silicon chloride such as silicon tetrachloride, hydrolyzing as the following formula (2) under oxidizing atmosphere such as in a flame, or oxidizing as the following formula (3) to obtain a silicon dioxide particle, sedimentating the silicon dioxide particle,

SiCl₄ + 2H₂O → SiO₂ + 4HCl (2)

SiCl₄ + O₂ → SiO₂ + 2Cl₂ (3)

The porous synthesized silica porous body by means of above vapor phase synthesis has known to avoid being contaminated by metallic impurities, which is formed by corrosion of container, because of separating halogen gas such as HCl, Cl₂ from the particle at the step of sedimentation of the silicon dioxide particle, and comes to extremely high purity with 1 ppm or less of metallic elements impurity.

Since carbon is deposited homogeneously on the porous synthesized silica glass body by means of heat treating the porous body under an atmosphere comprising high purity hydrocarbon gas or hydrocarbon halide gas, it is possible to be dense by viscous flow of the synthesized silica glass by means of heat-treating the above porous silicon dioxide-carbon complex having 1 or less of the mole ratio of carbon to silicon oxide at a temperature of from 1200 °C to 1600 °C. In addition, a extremely high purity and dense silicon dioxide-carbon complex can be synthesized in the cause of a high purity starting material, and without the steps of mixing and molding,

Also, it is possible to produce silicon carbide from deposited carbon and the synthesized silica glass, and to be dense of the synthesized silica glass by means of heat-treating the above porous silicon dioxide-carbon complex having 1 or less of the mole ratio of carbon to silicon dioxide at a temper-ature of more than 1600 °C. In addition, the extremely high purity and dense silicon dioxide-silicon carbide complex can be synthesized in the cause of a high purity starting material, and without the steps of mixing and molding.

In the case of using the extremely high purity porous synthesized silica glass body as silicon dioxide in the vapor phase synthesis showing formula (1), a porous silicon dioxide-carbon body, which is similar to microscopical mixture of silicon dioxide and carbon, is obtained by the steps of heat-treating of the porous body under an atmosphere comprising hydrocarbon gas or hydrocarbon halide gas, depositing carbon homogeneously over inside of the porous body. Provided that the porous silicon dioxide-carbon body which has 1 or less of the mole ration of carbon to silicon dioxide is heat-treated at 1200 °C or more, the silicon dioxide-carbon complex material is promoted to be dense by viscous sintering. On the other hand, provided that the porous silicon dioxide-carbon body is heat-treated at a temperature of less than 1600 °C, the dense silicon dioxide-carbon complex is obtained because carbon does not react with silica glass. Also, on condition that porous silicon dioxide-carbon body has 1 or more of the mole ration of carbon to silicon dioxide, a dense silicon dioxide-carbon complex is not obtained because carbon covering silica glass inhibits to heat-treat due to viscous flow of silica glass.

Further, in case of sintering porous silicon dioxide-carbon body having 1 or less of the mole ration of carbon to silicon dioxide, it is recognized that standard free energy (ΔG) in formula (1) comes to negative value at 1600 °C or more, as the result of thermodynamic calculation illustrated in fig.1, and a part of synthesized silica glass becomes silicon carbide. On condition that porous silicon dioxide-carbon body has 1 or more of the mole ration of carbon to silicon dioxide, the synthesized silica glass becomes mostly silicon carbide, and a dense silicon dioxide-silicon carbide complex can not be obtained because it is difficult to sinter silicon carbide. Therefore, it is necessary to regulate 1 or less of the mole ration of carbon to silicon dioxide in the porous synthesized silica glass body depositing carbon. Moreover, on condition that heat-treating temperature is 2000 °C or more, a dense silicon dioxide-silicon carbide complex can not be obtained effectively even though the porous body has 1 or less of the mole ration of carbon to silicon dioxide because vaporization of silicon oxide is promoted as showing formula (4):

SiO₂ + C→ SiO + CO (4)

Then, we refer to a process for producing a silicon carbide powder, the process comprises the steps of depositing carbon produced by means of pyrolysis of hydrocarbon gas or hydrocarbon halide gas in the porous synthesized silica glass body, heat-treating the same at a temperature of from 1600 °C to 2500 °C. As a result, the content of impurity such as transition metals, amphoteric metals, alkali metals, alkali earth metals comes to 10 ppm or less, and a high purityβ -type silicon carbide which has 0.01 ∼ 10 µm average particle diameter, 10 ∼ 70 m²/g specific surface area and a good degree of sintering can be obtained in a good yield without the step of milling the powder.

The synthesized silica glass produced by Soot method is composed of silicon carbide particle of 0.01 ∼ 10 µm average particle diameter, and has 40 ∼ 80 % of porosity and high purity with 1 ppm or less of impurities content. Also, the synthesized silica glass is not contaminated at the steps of producing because of without the steps of mixing with binder and molding such as press.

Further, according to this invention, the synthesized silica glass is heat-treated under an atmosphere comprising at least one gas among hydrocarbon gas such as CH₄, C₂H₆, C₃H₈, C₄H₁₀, C₂H₄, C₂H₂, C₆H₆, and hydrocarbon halide gas such as CH₃Cl, CH₂Cl₂, CHCl₃, C₂H₄Cl₂, C₂H₃Cl₃, C₂H₃Cl, C₂H₂Cl₂, C₂HCl₃, C₆H₅Cl, at a temperature of from decomposition temperature of the used gas to 1400 °C. If the temperature is less than decomposition temperature of the used gas, carbon can not be deposited, and if the temperature is more than 1400 °C, carbon can not be deposited over inside because of becoming dense porous body at a temperature of 1400 °C or more.

In addition, it is necessary to regulate from 1 to 3 of the mole ratio of carbon to silicon dioxide in base material. Because the reaction of silicon dioxide with carbon is performed as follows (1):

SiO₂ + 3C→ SiC + 2CO (1)

and carbon deposition with more than 3 of the mole ratio of carbon to silicon dioxide allows to survive excess free carbon. In case of existing excess free carbon, silicon carbide produced by means of carbon reduction of porous synthesized silica glass does not become powder, but porous body. Therefore, the step of milling powder in order to obtain powder-shaped silicon carbide causes contamination.

On the other hand, in case that the mole ratio of carbon to silicon dioxide is less than 1, silicon dioxide particles cause fusion at the step of rising temperature of heat-treatment due not to cover the surfaceof the silicon dioxide particle sufficiently. As a result, silicon dioxide particle becomes large and dense, and it inhibits to desorb CO gas.

In addition, because of vaporizing excess silicon oxide, the yield of producing material lowers at a range of high temperature.

Therefore, it is necessary to regulate from 1 to 3 of the mole ratio of carbon to silicon dioxide, preferably from 2.5 to 3.

In next step, the synthesized silica glass-carbon complex is heat-treated at a temperature of from 1600 to 2500 °C under non-oxidazing atmosphere, for example, comprising at least one gas among helium, neon, argon, hydrogen, etc. or under a vacuum. So, a super fine particle of silicon dioxide is reduced extremely rapidly by a super fine particle of pyrolytic carbon, and becomes completely silicon carbide.

The pyrolytic carbon, as described above, is fine particle in several ten nm, and is deposited on surface of the silicon dioxide particle homogeneously. As a result, the silicon dioxide particle does not grow, and the fine silicon carbide particle is obtained. Also, produced CO gas is excluded to outside of system easily because synthesized silica glass-carbon complex is porous.

On this occasion, if heat-treating temperature is less than 1600 °C, silicon dioxide is not produced, and heat-treating temperature is not preferable more than 2500 °C in point of energy and the cost of device.

According to the above-mentioned method, the β -type silicon carbide powder is mainly obtained. There are several crystal of silicon carbide such as 2H-type silicon carbide which is stable at a lower temperature than β -type silicon carbide, 4H- α -type and 6H- α -type silicon carbide which are stable at a higher temperature than β -type silicon carbide. The 2H-type silicon carbide is unstable at a range of usual heat-treating, and causes unusual glowing particle at heat-treating operation. The existence of 4H and 6H- α -type silicon carbide in β -type silicon carbide promotes phase transformation from β to α during heat-treating, and it forms plate-shaped rough α -type silicon carbide. As a result, it is difficult to obtain heat-treating body, which is high density, homogeneous and high strength. Therefore, it is preferable to provide β -type silicon carbide.

### DESCRIPTION OF PREFERRED EMBODIMENTS

The invention will be understood more readily with reference to the following examples.

### EXAMPLE 1

In the following example, a porous synthesized silica glass body, which was produced by means of Soot method, and which had about 0.3 g/cm³ apparent density, about 12 m²/g specific surface area, about 0.2 µm average particle diameter, was used. The porous synthesized silica glass body was heat-treated at a temperature of from 500 °C to 1500 °C under an atmosphere of 100 % CH₄ for 1 hour.

The results are shown in Table 1.

**Table 1**

| | condition of operation | | | existence of carbon deposit over inside porous body |
|---|---|---|---|---|
| | atmosphere | time | temp. | |
| deposit operation of carbon | CH₄ 100 % | 1 hr | 500 °C | X |
| | | | 600 °C | ○ |
| | | | 800 °C | ○ |
| | | | 1000 °C | ○ |
| | | | 1200 °C | ○ |
| | | | 1400 °C | ○ |
| | | | 1500 °C | X |

| | condition of operation | | | existence of SiC peak by X-ray diffracting |
|---|---|---|---|---|
| | atmosphere | time | temp. | |
| heat-treating operation | under reduced pressure | 3 hr | 1500 °C | X |
| | | | 1600 °C | ○ |
| | | | 1700 °C | ○ |
| | | | 1800 °C | ○ |
| | | | 2000 °C | ○ |

These data, listed in Table 1, indicate that the silicon dioxide-carbon complex, in which carbon covers the silica glass particles, was obtained by depositing carbon over inside of the porous body at a temperature of from 600 °C to 1400 °C, which is decomposition temperature of CH₄ gas. On the other hand, pyrolysis did not occur at 500 °C, and at 1500 °C, carbon was deposited on only surface of the porous body because the synthesized silica glass was promoted to be dense at the step of rising up to 1500 °C. In the case of heat-treating at a temperature of 1000 °C, the mole ratio of carbon to silicon dioxide was 3.5.

The silicon dioxide-carbon complex, which treated at a temperature of 1000 °C in a similar manner as above, was heat-treated at a temperature of from 1500 °C to 2000 °C under reduced pressure for 3 hours. The results are shown in Table 1.

These data, listed in Table 1, indicate that the formation of β -type silicon carbide was confirmed in examples at a heat-treating temperature of 1600 °C or more, resulted from X-ray diffraction in Table 1 and Fig. 2.

The porous silicon carbide, which contaminated 1 ppm metallic elements, was extremely high purity silicon carbide.

Therefore, according to this invention, the extremely high purity silicon dioxide-carbon complex can be produced without contaminants from reactor, jig, and atmosphere because of depositing carbon produced by means of vapor pyrolysis in the high purity porous synthesized silica glass. In addition, the extremely high purity silicon carbide can be produced by means of heat-treating the high purity silicon dioxide-carbon complex.

### EXAMPLE 2

In the following example, a porous synthesized silica glass body, which is produced by means of Soot method, and which had about 0.3 g/cm³ apparent density, about 12 m²/g specific surface area, and 0.2 µm average particle diameter, was heat-treated for 4 hours at a temperature of 1000 °C under an atmosphere of 100 % CH₄, a porous synthesized silica glass body-carbon complex having about 8.5 of the mole ratio of carbon to silicon dioxide was obtained.

Then, the thus obtained porous silicon carbide-carbon complex, porous body, having about 46 % porosity and about 5.5 of the mole ratio of carbon to silicon dioxide was obtained by means of heat-treating the complex for 3 hours at a temperature of 2000 °C under a vacuum.

Then, the thus obtained porous body was put in graphite crucible covered by silicon carbide, 10 N in purity massive metallic silicon was put in the crucible along the porous compact, the both was heated at 1600 °C, as a result, a melted silicon infiltrated to pore of the porous molding.

The density and bending strength of the silicon carbide material produced by the above-mentioned method are shown in Table 2, and the concentration of metallic impurities are shown Table 3.

**Table 2**

| | apparent density (g/cm³) | apparent porosity (vol %) | bending strength (Kgf/mm²) |
|---|---|---|---|
| EXAMPLE 2 | 2.81 | 0.10 | 42.4 |

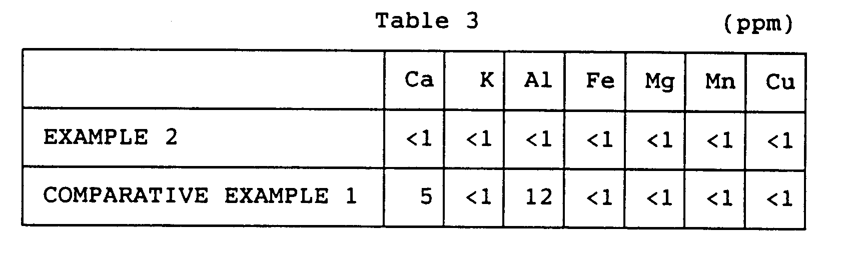

### COMPARATIVE EXAMPLE 1

A silicon carbide material used for producing for semiconductor was produced by means of usual method. The impurity are shown in Table 3 with EXAMPLE 2.

### EXAMPLE 3

In the following example, a porous synthesized silica glass body, which was produced by means of Soot method, and which had about 0.5 g/cm³ apparent density, about 10 m²/g specific surface area, and 0.2 µm average particle diameter, was heat-treated for 4 hours at a temperature of 900 °C under an atmosphere of 100 % CH₄, a porous synthesized silica glass body-carbon complex having about 6.5 of the mole ratio of carbon to silicon dioxide was obtained.

Then, the thus obtained complex was sintered for 3 hours at a temperature of 1800 °C under a vacuum. The silicon carbide-carbon complex (porous compact), having about 0.9 g/cm³ apparent density, about 32 % porosity and about 3.5 of the mole ratio of carbon to silicon dioxide, was obtained.

Then, the thus obtained porous molding was heat-treated in electric reactor having silica glass-made reactor tube under an atmosphere of 10 vol % SiHCl₃ gas and 90 vol % H₂ gas at a temperature of 1000 °C, excess carbon in the porous molding was allowed to react with deposited silicon. As a result, the dense silicon carbide in which silicon infiltrated was obtained.

The density and bending strength of the silicon carbide material produced by the above-mentioned method are shown in Table 4, and the concentration of metallic impurities are shown Table 5.

According to the process for producing the silicon carbide material, the silicon carbide material, which had 2.97 g/cm³ apparent density, 0.82 vol % apparent porosity, a high strength such as 48.2 Kgf/mm² average bending strength, and a high purity such as less than 1 ppm impurities, was obtained.

### COMPARATIVE EXAMPLE 2

A silicon carbide material was produced from the silicon carbide powder by means of mixing silicon carbide powder with organic binder, molding, heat-treating, and then impregnating with melting silicon to the porous silicon carbide body. The density and bending strength of this silicon carbide material produced by the above mentioned method are shown in Table 4, and the concentration of metallic impurities are shown Table 5. According to this method, a silicon carbide, which had 3.02 g/cm³ apparent density, 0.31 vol % apparent porosity, a comparatively low strength such as 24.8 Kgf/mm² average bending strength, and which contained a lot of impurities, was obtained.

**Table 4**

| | apparent density (g/cm³) | apparent porosity (vol %) | bending strength (Kgf/mm²) |
|---|---|---|---|
| EXAMPLE 3 | 2.97 | 0.82 | 48.2 |
| COMPARATIVE EXAMPLE 2 | 3.02 | 0.31 | 24.8 |

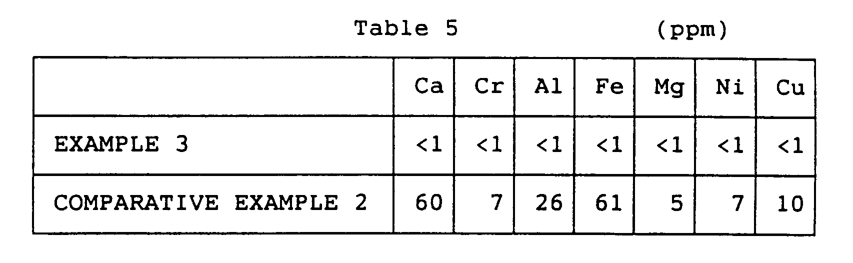

Therefore, according to this invention, the high purity and the high strength silicon carbide, which is useful as a jig for producing semiconductor, for example, heat resistance jig material such as process tube, wafer boat used for heat doping operation, can be produced.

### EXAMPLE 4

In the following example, a silica glass particle, which had about 0.3 g/cm³ apparent density, about 12 m²/g specific surface area, about 0.2 µm average particle diameter, was deposited on the external surface of a high purity synthesized silica glass pipe having 190 mm of an external diameter by means of OVD method. Then, the pipe-shaped porous synthesized silica glass body depositing porous silica glass body was heat-treated at a temperature of from 500 °C to 1500 °C under an atmosphere of 100 % CH₄ for 4 hour. The results are shown in Table 6. These data, listed in Table 6, indicate that the pipe-shaped silicon dioxide-carbon complex, in which the silica glass particles were covered by carbon, was obtained by means of heat-treating at a temperature of from 600 °C to 1400 °C, and depositing carbon over inside of the porous synthesized silica glass body.

On the other hand, pyrolysis did not occur at 500 °C, and carbon was deposited on only surface of the porous body because the synthesized silica glass was promoted to be dense at the step of rising temperature up to 1500 °C.

In the case of heat-treating at a temperature of 1000 °C, the mole ratio of carbon to silicon dioxide was 8.5.

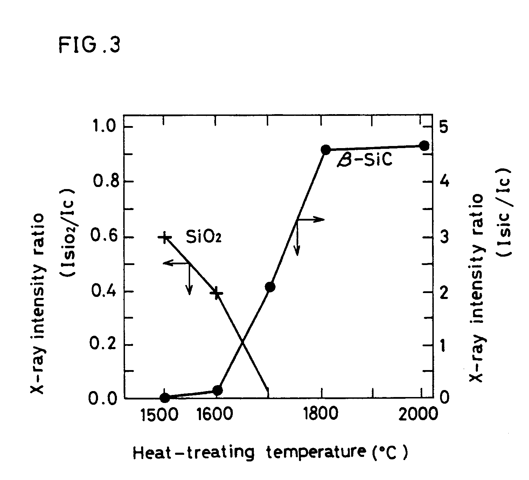

Then, the pipe-shaped silicon dioxide-carbon complex, which was treated at a temperature of 1000 °C in a similar manner as above, was heat-treated at a temperature of from 1500 °C to 2000 °C under reduced pressure for 3 hours. As a result, the formation of β -type silicon carbide was confirmed at a heat-treating temperature of 1600 °C or more, from X-ray diffraction in Fig. 3.

The porous silicon carbide pipe, which included 1 ppm or less impurities, had extremely high purity silicon carbide material.

The thus obtained pipe-shaped silicon dioxide-carbon complex was heat-treated under reduced pressure at a temperature of 2000 °C for 3 hours, as a result, the silica glass used for a base material eliminated, the porous silicon carbide pipe comprising excess carbon, which had about 0.3 g/cm³ apparent density, about 46 % porosity, and about 5.5 of the mole ratio of carbon to silicon dioxide was obtained.

Then, the thus obtained porous silicon carbide pipe was dipped into melting silicon in graphite crucible covered by silicon carbide under reduced pressure at a temperature of 1600 °C. As a result, the melted silicon infiltrated to pore of the porous body, and the dense silicon carbide pipe could be obtained.

### EXAMPLE 5

In the following example, the porous silica glass body, which had about 0.3 g/cm³ apparent density, about 12 m²/g specific surface area, about 0.2 µm average particle diameter, was deposited on the external surface of the high purity synthesized silica glass pipe, having 190 mm an external diameter produced by means of OVD method. Then, the thus obtained pipe-shaped porous synthesized silica glass body was heat-treated at a temperature of 1000 °C under an atmosphere of 40 % CH₄ and 60 % argon for 30 minutes. As a result, carbon was deposited over inside of pipe-shaped porous synthesized silica glass body, and the pipe-shaped silicon dioxide-carbon complex, which has 0.5 of the mole ratio of carbon to silicon dioxide, was obtained.

The thus obtained pipe-shaped silicon dioxide-carbon complex was sintered at a temperature of from 1500 °C to 2000 °C. As a result, as listed in Table 7, silicon carbide did not produced at a temperature of 1500 °C, and at a temperature of more than 2000 °C, the dense silicon carbide pipe could not be obtained because of forming bubble remarkably due to SiO, volatile product of silica glass.

The pipe-shaped silicon dioxide-carbon complex which was heat-treated at a temperature of 1800 °C under reduced pressure for 3 hours, became dense practically. A deformation of internal diameter of the pipe-shaped silicon dioxide-carbon complex, which had 190 mm internal diameter, 6 mm thickness and 20 mm length after heat treatment at a temperature of 1200 °C for 24 hours, was 1 mm or less.

**Table 6**

| | condition of operation | | | existence of carbon deposit over inside porous body |
|---|---|---|---|---|
| | atmosphere | time | temp. | |
| deposit operation of carbon | CH₄ 100 % | 4 hr | 500 °C | X |
| | | | 600 °C | ○ |
| | | | 800 °C | ○ |
| | | | 1000 °C | ○ |
| | | | 1200 °C | ○ |
| | | | 1400 °C | ○ |
| | | | 1500 °C | X |

**Table 7**

| C/SiO₂ | condition of operation | | | forming SiC | volatilization of SiO₂ |
|---|---|---|---|---|---|
| | atmosphere | time | temp. | | |
| 0.5 | under reduced pressure | 3 hr | 1500 °C | X | X |
| | | | 1600 °C | ○ | X |
| | | | 1800 °C | ○ | X |
| | | | 2000 °C | ○ | X |
| | | | 2200 °C | ○ | ○ |

According to this process for producing the silicon carbide tube, the extremely high purity pipe-shaped porous silicon carbide can be obtained because the silicon carbide is synthesized by means of carbothermic reduction with the high purity pipe-shaped porous synthesized from silica glass and vapor phase pyrolytic carbon, and infiltrating silicon to this pipe-shaped porous silicon carbide.

Also, the high purity dense silicon dioxide-carbon complex tube can be obtained by means of heat-treating so as to become 1 or less of the mole ratio of carbon to silicon dioxide.

Therefore, the high purity and the high strength silicon carbide tube, which is useful as a jig for producing semiconductor, for example, heat resistance jig material such as process tube, wafer boat used for heat doping operation, can be produced with a single process and at a low cost.

### EXAMPLE 6

In the following example, the porous synthesized silica glass body, which was produced by means of Soot method and had about 0.3 g/cm³ apparent density, and about 0.2 µm average particle diameter, was joined at the plane. Then, the porous synthesized silica glass body was heat-treated at a temperature of 1000 °C, under an atmosphere of 100 % CH₄ for stated hours. As a result , the porous body which had various carbon content, as li sted in Table 8, was obtained. Then, the porous silicon carbide-carbon molding was obtained by means of heat-treating the porous body at a temperature of 2000 °C under a vacuum for 3 hours. Then, the molding was put in graphite crucible, 10 N impurity massive metallic silicon was put in the crucible along the molding, and the both was heated at 1550 °C, as a result, a melted silicon infiltrated to pore of the molding, the silicon carbide molding was obtained.

### EXAMPLE 7

The silicon dioxide-carbon porous molding, which was produced by means of heat-treating the same porous synthesized silica glass body that used in EXAMPLE 6 for stated hours at a temperature of 1000 °C under an atmosphere of 100 % CH₄, was jointed at the plane. Then, the thus obtained molding was heat-treated for 3 hours at a temperature of 2000 °C under a vacuum. As a result, a porous silicon carbide-carbon molding was obtained. Then, the silicon carbide molding was obtained by means of infiltrating metallic silicon the same manner that EXAMPLE 6 does.

### EXAMPLE 8

The porous silicon dioxide-carbon molding, which was produced by means of heat-treating the same porous synthesized silica glass body that used in EXAMPLE 6 for stated hours at a temperature of 1000 °C under an atmosphere of 100 % CH₄, was obtained. Then, the molding was heat-treated for 3 hours at a temperature of 2000 °C under a vacuum to obtain a porous silicon carbide-carbon molding. Then, the thus obtained molding was joined at the plane. As a result, silicon carbide molding was obtained by means of infiltrating metallic silicon the same manner that EXAMPLE 6 does.

### COMPARATIVE EXAMPLE 3

A molding was produced by means of joining a dense body, which was silicon carbide heat-treating body produced from metallic silicon.

### COMPARATIVE EXAMPLE 4

A molding was produced by means of forming a porous silicon carbide body by means of molding the silicon carbide powder and heat-treating, and infiltrating metallic silicon after applying carbon at the plane.

The high temperature junction strength at 1300 °C of the silicon carbide molding produced in the above-mentioned examples are shown in Table 8, and the result of purity analysis are shown in Table 9.

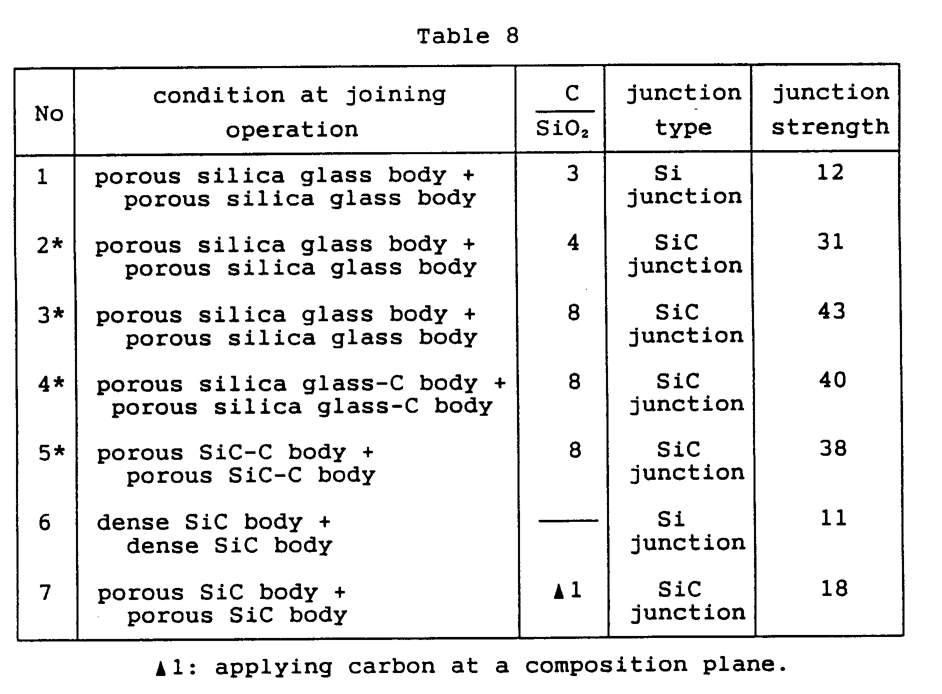

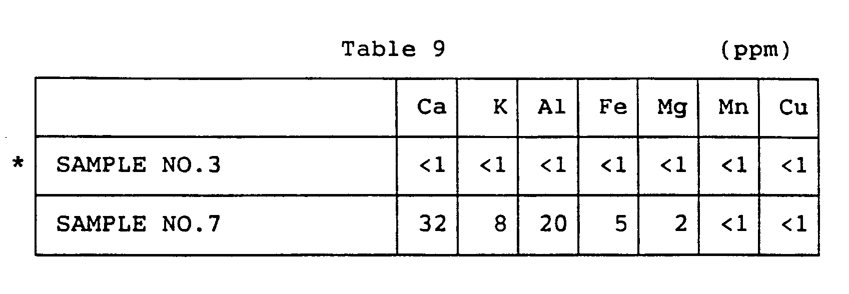

On this occasion, from sample No.2 to No.5 marked '*' shows example of this invention, and sample No.1, No.6, No. 7 shows example of except for this invention.

These data, listed in Table 8 and Table 9, indicate that the high purity silicon carbide compact according to this invention shows higher strength than a usual silicon junction body. Also, a wafer boat produced from this high purity silicon carbide molding is suitable for using wafer heat treatment in point of purity, strength and durability.

On the other hand, the junction strength jointed between dense silicon carbide body is lower than base material's. Also, in case of infiltrating metallic silicon after applying carbon at a composition plane, the junction strength is low due to heterogeneity of junction and base material, contamination of impurities from carbon for applying and from the step of applying is recognized.

According to the process for producing the jointed silicon carbide molding, the high strength junction body, which is integral construction without interface, large-sized, complex, can be obtained. In case of producing comparatively large-sized compact, the high strength junction body can be obtained because the carbon, produced by means of pyrolysis of hydrocarbon gas or hydrocarbon halide gas, is deposited homogeneously with inhibiting a difference of carbon deposition from surface to inside. Therefore, the high purity and the high strength silicon carbide tube, which is useful as a jig producing for semiconductor, for example, heat resistance jig material such as process tube, wafer boat used for heat doping operation, can be produced with a single process and at a low cost.

According to this invention, since the process comprises the steps of porous joining synthesized silica glass body at the plane to join, depositing carbon produced by means of pyrolysis of the gas comprising hydrocarbon or hydrocarbon halide in said porous body and said plane so as to become 3.5 or more of the mole ratio of carbon to silicon dioxide, heat-treating the same to obtain a porous silicon carbide molding, charging in said porous silicon carbide molding with metallic silicon, the high strength junction body, which is integral construction without interface, large-sized, complex, can be obtained.

Moreover, according to this invention, since the process comprises the steps of depositing carbon produced by means of pyrolysis of the gas comprising hydrocarbon or hydrocarbon halide in a porous synthesized silica glass body so as to become 3.5 or more of the mole ratio of carbon to silicon dioxide to obtain porous silicon dioxide-carbon molding, joining said porous molding at the plane to join, heat-treating the same to obtain porous silicon carbide molding, charging said porous silicon carbide molding with metallic silicon, in case of producing large-sized molding, the high strength junction body can be obtained because carbon, produced by means of pyrolysis of hydrocarbon gas or hydrocarbon halide gas, is deposited homogeneously with inhibiting a difference of carbon deposition from surface to inside.

Also, according to this invention, since the process comprises the steps of depositing carbon produced by means of pyrolysis of the gas comprising hydrocarbon or hydrocarbon halide in a porous synthesized silica glass body so as to become 3.5 or more of the mole ratio of carbon to silicon sioxide, heat-treating the same to obtain porous silicon carbide molding, joining said porous silicon carbide molding at the plane to join, charging the same with metallic silicon, even in case of producing large-sized molding, the high strength junction body can be obtained because carbon, produced by means of pyrolysis of hydrocarbon gas or hydrocarbon halide gas, is deposited homogeneously with inhibiting a difference of carbon deposition from surface to inside.

Therefore, the high purity and the high strength joined silicon carbide molding, which is useful as a jig for producing semiconductor, for example, heat resistance jig material such as process tube, wafer boat used for heat doping operation, can be produced with a single process and at a low cost.

### EXAMPLE 9

In the following example, the porous synthesized silica glass body, which was produced by means of Soot method, and had about 0.3 g/cm³ apparent density, about 12 m²/g specific surface area, and 0.2 µm average particle diameter, was heat-treated for 30 minutes at a temperature of 1000 °C under an atmosphere of various concentration (diluting with Ar gas) of CH₄ gas. As a result, a carbon was deposited over inside of the porous synthesized silica glass body, the porous silicon dioxide-carbon body, in which silica glass particle was covered by carbon, was obtained. Then, The porous silicon dioxide-carbon body, which had the mole ratio of carbon to silicon dioxide as listed in Table 10, was obtained.

The thus obtained porous silicon dioxide-carbon body was heat-treated under a vacuum at a temperature of 1500 °C for 3 hours. As listed in Table 10, in case that the porous silicon dioxide-carbon body had 1 or less of the mole ratio of carbon to silicon dioxide, the dense silicon dioxide-carbon complex was obtained because of promoting to be dense of porous silicon dioxide-carbon body due to viscous sintering of silica glass. By contrast, in case that the porous silicon dioxide-carbon body had 1 or more of the mole ratio of carbon to silicon dioxide, the dense silicon dioxide-carbon complex material was not obtained because the carbon covering silica glass inhibits sintering by viscous flow of silica glass.

Also, if the porous silicon dioxide-carbon body, which had 1 or less of the mole ratio of carbon to silicon dioxide, was heat-treated at a temperature of 2000 °C, as listed in Table 10, the dense silicon dioxide-silicon carbide complex was obtained because the part of synthesized silica glass became silicon carbide. Then, in case that the porous silicon dioxide-carbon body had more than 1 of the mole ratio of carbon to silicon dioxide, almost synthesized silica glass became silicon carbide. As a result, the dense silicon dioxide-silicon carbide complex was not obtained because the silicon carbide is difficult to heat-treat. Therefore, it is necessary 1 or less of the mole ratio of carbon in the porous synthesized silica glass body at a heat-treating temperature of 2000 °C.

**Table 10**

| C/SiO₂ | heat-treating condition | becoming dense |
|---|---|---|
| 0 | 1500 °C × 3 hr. | ○ |
| 0.5 | | ○ |
| 1.0 | | ○ |
| 2.0 | | X |
| 0 | 2000 °C × 3 hr. | ○ |
| 0.5 | | ○ |
| 1.0 | | ○ |
| 2.0 | | X |

Also, the porous synthesized silica glass body, which was produced by means of Soot method, and had about 0.3 g/cm³ apparent density, about 12 m²/g specific surface area, and 0.2 µm average particle diameter, was heat-treated for 30 minutes at a temperature of 1000 °C under an atmosphere of 40 % CH₄ (diluting with Ar gas). As a result, carbon was deposited over inside of the porous synthesized silica glass body, the porous silicon dioxide-carbon body, in which silica glass particle was covered by carbon, was obtained. Then, the porous silicon dioxide-carbon body had 0.5 of the mole ratio of carbon to silicon dioxide.

The thus obtained porous silicon dioxide-carbon body was heat-treated under a vacuum at a temperature of from 1100 °C to 1600 °C for 3 hours. As listed in Table 11, in case that the porous silicon dioxide-carbon body was heat-treated at a temperature of from 1200 °C to 1600 °C, a dense silicon dioxide-carbon complex was obtained because of promoting to be dense of porous silicon dioxide-carbon body.

Particularly, in case that the porous silicon dioxide-carbon body was heat-treated at a temperature 1500 °C, being dense was performed completely, the silicon dioxide-carbon complex having about 1100 °C of the temperature of deformation (the temperature of becoming viscosity coefficient of 10^{14.5} poise), had higher heat resistance than a usual silica glass.

Also, this silicon dioxide-carbon complex, comprising 1 ppm of metallic element impurity, had extremely high purity.

**Table 11**

| C/SiO₂ | heat-treating temperature | being dense | composition | volatilization |
|---|---|---|---|---|
| 0.5 | 1100 °C | X | C + SiO₂ | X |
| 0.5 | 1200 °C | ○ | C + SiO₂ | X |
| 0.5 | 1300 °C | ○ | C + SiO₂ | X |
| 0.5 | 1400 °C | ○ | C + SiO₂ | X |
| 0.5 | 1500 °C | ○ | C + SiO₂ | X |
| 0.5 | 1600 °C | ○ | SiC+C+SiO₂ | X |
| 0.5 | 1800 °C | ○ | SiC + SiO₂ | X |
| 0.5 | 2000 °C | ○ | SiC + SiO₂ | X |
| 0.5 | 2200 °C | - | - | ○ |

The porous silicon dioxide-carbon body produced in the manner as described in the above example was heat-treated under a vacuum at a temperature of from 1500 °C to 2200 °C for 3 hours. As listed in Table 11, in case that the porous silicon dioxide-carbon body was heat-treated at a temperature of from 1600 °C to 2000 °C, a dense silicon dioxide-carbon complex was obtained because of forming β -type silicon carbide. Particularly, in case that porous silicon dioxide-carbon body was heat-treated at a temperature 1800 °C, the silicon dioxide-carbon complex having about 1200 °C of the temperature of deformation (the temperature of becoming viscosity coefficient of 10^{14.5} poise), had higher heat resistance than a usual silica glass.

Also, this silicon dioxide-silicon carbide complex, comprising 1 ppm of metallic element impurity, had extremely high purity.

Therefore, according to the process for producing the silicon dioxide-carbon complex or a silicon dioxide-silicon carbide complex, since the process comprises the steps of depositing carbon produced by means of pyrolysis of the gas comprising hydrocarbon or hydrocarbon halide in a porous synthesized silica glass body so as to become 1 or less of the mole ratio of carbon to silicon dioxide to obtain a porous silicon dioxide-carbon complex, making the same dense by means of heat-treating at a temperature of from 1200 °C to 1600 °C, or the steps of depositing carbon produced by means of pyrolysis of the gas comprising hydrocarbon or hydrocarbon halide in a porous synthesized silica glass body so as to become 1 or less of the ratio of carbon to silicon dioxide to obtain a porous silicon dioxide-carbon complex, generating silicon carbide by means of heat treatment of the same at a temperature of from 1600 °C to 2000 °C, it is possible to mix super high purity porous synthesized silica glass with vapor phase pyrolytic carbon microscopically, thereafter being dense due to viscous flow of silica glass, thereby obtaining the silicon dioxide-carbon complex and the silicon dioxide-silicon carbide complex having a extremely higher purity and a higher heat resistance than silica glass.

Therefore, the dense silicon dioxide-carbon complex and silicon dioxide-silicon carbide complex can be provided as a high heat resistance material for producing semiconductor comparatively at a low cost.

### EXAMPLE 10

In the following example, the porous synthesized silica glass body, which was produced by means of Soot method, and which had about 0.3 g/cm³ apparent density, about 12 m²/g specific surface area, and 0.2 µm average particle diameter, was heat-treated for 1 hour at a temperature of 1000 °C under an atmosphere of 100 % CH₄ gas. As a result, the porous synthesized silica glass-carbon complex, which had about 2.8 of the mole ratio of carbon to silicon dioxide, was obtained. Then, this complex was heat-treated at a temperature of 2000 °C under a vacuum for 3 hours, as listed in Table 12 and Table 13, thereby obtaining high purity and fine β -type silicon carbide powder.

### EXAMPLE 11

In the following example, the porous synthesized silica glass body produced as a same manner in EXAMPLE 10, was heat-treated for 1.5 hours at a temperature of 1000 °C under an atmosphere of 20 % CH₄ gas and 80 % H₂ gas. As a result, the porous synthesized silica glass-carbon complex, which had about 1.2 of the mole ratio of carbon to silicon dioxide, was obtained. Then, this complex was heat-treated at a temperature of 2000 °C under a vacuum for 3 hours, as listed in Table 12, thereby obtaining comparatively large-sized β - type silicon carbide powder.

### COMPARATIVE EXAMPLE 5

In the following example, the porous synthesized silica glass body produced as a same manner in EXAMPLE 10, was heat-treated for 1.5 hour at a temperature of 1000 °C under an atmosphere of 100 % CH₄ gas. As a result, the porous synthesized silica glass-carbon complex, which had about 3.7 of the mole ratio of carbon to silicon dioxide, was obtained. Then, this complex was heat-treated at a temperature of 2000 °C under a vacuum for 3 hours, as listed in Table 12, thereby obtaining massive porous silicon carbide comprised carbon as impurity but powdered silicon carbide.

### COMPARATIVE EXAMPLE 6

In the following example, the porous synthesized silica glass body produced as a same manner in EXAMPLE 10, was heat-treated for 1 hour at a temperature of 1000 °C under an atmosphere of 20 % CH₄ gas and 80 % H₂ gas. As a result, the porous synthesized silica glass-carbon complex, which had about 0.8 of the mole ratio of carbon to silicon dioxide, was obtained. Then, this complex was heat-treated at a temperature of 2000 °C under a vacuum for 3 hours, as listed in Table 12, thereby obtaining the large-sized silicon carbide particle. This yield is about 22 %, and lower than other examples. Then, the purity of the silicon carbide powder produced by means of vapor phase reaction with SiCl₄ and CCl₄ are shown in Table 13 as COMPARATIVE EXAMPLE 7.

**Table 12**

| | C/SiO₂ | C content (wt%) | configuration and diameter of particle | specific surface area(m²/g) |
|---|---|---|---|---|
| EXAMPLE 10 | 2.8 | 0 | 0.25 µm round particle | 68 |
| EXAMPLE 11 | 1.2 | 0 | 5 µm round particle | 17 |
| COMPARATIVE EXAMPLE 5 | 3.7 | 11.5 | -massive porous body | 32 |
| COMPARATIVE EXAMPLE 6 | 0.8 | 0 | 30 µm indeterminate-type | 3.5 |

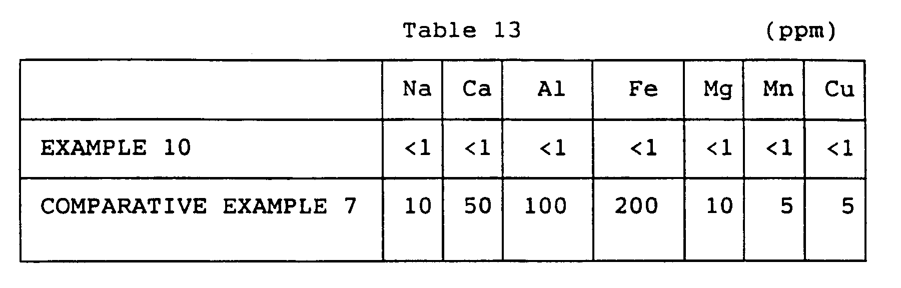

These data, listed in Table 12 and Table 13, indicate that in COMPARATIVE EXAMPLE 5 and COMPARATIVE EXAMPLE 6, the silicon carbide, which do not have from 1 to 3 of the mole ratio of carbon to silicon dioxide, is massive or large- sized silicon carbide particle. By contrast, in EXAMPLE 10 and EXAMPLE 11, the silicon carbide, which have from 1 to 3 of the mole ratio of carbon to silicon dioxide, comprises only trace contaminant, thereby obtaining the high purity and fine particle β -type silicon carbide which has 0.01 ∼ 10 µm an average particle diameter, 10 ∼ 70 m²/g specific surface area, and a good degree of sintering.

Therefore, according to the above-mentioned method, the high purity β -type silicon carbide having a good degree of sintering can be produced easily in a good yield, also, the dense, homogeneous and high strength heat-treating molding can be produced by means of using this β -type silicon carbide.

Consequently, according to this invention, since the process comprises the steps of depositing carbon produced by means of pyrolysis of a gas comprising a hydrocarbon and/or a hydrocarbon halide in a porous synthesized silica glass body so as to provide a mole ratio of carbon to silicon dioxide of from 1 to 3, heat-treating the same at a temperature of from 1600°C to 2500°C, a high purity β-type silicon carbide, which is especially useful for heat resistant ceramic moldings, and which has a good degree of sintering, can be produced easily in a good yield without the step of milling a powder.

## Claims

1. A process for producing a silicon carbide-base complex, comprising the step of:
depositing carbon produced by means of pyrolysis of a gas comprising a hydrocarbon and/or a hydrocarbon halide in a porous synthesized silica glass body.

2. A process for producing a silicon dioxide-carbon complex, comprising the step of:
depositing carbon produced by means of pyrolysis of a gas comprising a hydrocarbon and/or a hydrocarbon halide in a porous synthesized silica glass body so as to provide a mole ratio of carbon to silicon dioxide of 3 or more.

3. The process according to claim 2, wherein the pyrolysis temperature used is from the decomposition temperature of the hydrocarbon or the hydrocarbon halide gas to 1400°C.

4. A process for producing a silicon carbide-base complex, comprising the step of:
heat-treating the silicon dioxide-carbon complex of the process of Claim 2 or Claim 3 at a temperature of from 1600 °C to 2500°C.

5. A process for producing a silicon carbide material, comprising the steps of:
depositing carbon produced by means of pyrolysis of a gas comprising a hydrocarbon and/or a hydrocarbon halide in a porous synthesized silica glass body,
heat-treating the same to obtain a porous molding, and
charging the pores of said porous molding with metallic silicon.

6. The process according to claim 5, wherein the mole ratio of carbon deposited in the porous synthesized silica glass body to silicon dioxide is 3 or more.

7. The process according to claim 5 or claim 6, wherein the process further comprises the steps of:
reacting excess carbon existing in the porous molding with the charged metallic silicon.

8. The process according to claim 5 or claim 6, wherein the charging of the pores of the porous molding with metallic silicon is achieved by means of infiltration of molten silicon.

9. The process according to claim 7, wherein the charging of the pores of the porous molding with metallic silicon is achieved by means of infiltration of molten silicon.

10. The process according to claim 5 or claim 6, wherein the charging of the pores of the porous molding with metallic silicon is achieved by means of pyrolysis of a gas including silicon.

11. The process according to claim 7, wherein the charging of the pores of the porous molding with metallic silicon is achieved by means of pyrolysis of a gas including silicon.

12. A process for producing a silicon carbide tube, comprising the steps of:
forming a porous body of silica glass by means of vapor phase synthesis on the surface of a tubular material,
depositing carbon produced by means of pyrolysis of a gas comprising a hydrocarbon and/or a hydrocarbon halide in the porous body of silica glass so as to provide a mole ratio of carbon to silicon dioxide of 3 or more and heat-treating the same.

13. The process according to claim 12, wherein the heat-treating temperature is from 1600°C to 2500°C.

14. The process according to claim 12 or claim 13, wherein the process further comprises the step of:
charging the porous silicon carbide tube with metallic silicon.

15. A process for producing a silicon carbide-base complex, comprising the steps of:
joining a synthesized silica glass porous body at the plane to join,
depositing carbon produced by means of pyrolysis of a gas comprising a hydrocarbon and/or a hydrocarbon halide in said porous body and said plane so as to provide a mole ratio of carbon to silicon dioxide of 3.5 or more,
heat-treating the same to obtain a porous silicon carbide molding, and
charging said porous silicon carbide molding with metallic silicon.

16. A process for producing a silicon carbide-base complex, comprising the steps of:
depositing carbon produced by means of pyrolysis of a gas comprising a hydrocarbon and/or a hydrocarbon halide in a porous synthesized silica glass body so as to provide a mole ratio of carbon to silicon dioxide of 3.5 or more to obtain a porous silicon dioxide-carbon molding,
joining said porous molding at the plane to join, heat-treating the same to obtain porous silicon carbide molding, and
charging said porous silicon carbide molding with metallic silicon.

17. A process for producing a silicon carbide-base complex, comprising the steps of:
depositing carbon produced by means of pyrolysis of a gas comprising a hydrocarbon and/or a hydrocarbon halide in a porous synthesized silica glass body so as to provide a mole ratio of carbon to silicon dioxide of 3.5 or more,
heat-treating the same to obtain a porous silicon carbide molding,
joining said porous silicon carbide molding at the plane to join, and
charging the same with metallic silicon.

18. A process for producing a silicon dioxide-carbon complex, comprising the steps of:
depositing carbon produced by means of pyrolysis of a gas comprising a hydrocarbon and/or a hydrocarbon halide in a porous synthesized silica glass body so as to provide a mole ratio of carbon to silicon dioxide of 1 or less to obtain a porous silicon dioxide-carbon complex, and
making the same dense by means of heat-treating at a temperature of from 1200°C to 1600°C.

19. A process for producing a silicon dioxide-silicon carbide complex, comprising the steps of:
depositing carbon produced by means of pyrolysis of a gas comprising a hydrocarbon and/or a hydrocarbon halide in a porous synthesized silica glass body so as to provide a mole ratio of carbon to silicon dioxide of 1 or less to obtain a porous silicon dioxide-carbon complex, and
generating silicon carbide by means of a heat treatment of the same at a temperature of from 1600°C to 2000°C.

20. A process for producing a silicon dioxide-silicon carbide complex tube, comprising the steps of:
forming a porous body of silica glass by means of vapor phase synthesis on the surface of a tubular material,
depositing carbon produced by means of pyrolysis of a gas comprising a hydrocarbon and/or a hydrocarbon halide in the porous body of silica glass so as to provide a mole ratio of carbon to silicon dioxide of 1 or less, and
heat-treating the same at a temperature of from 1600°C to 2000°C.

21. A process for producing a silicon carbide powder, comprising the steps of:
depositing carbon produced by means of pyrolysis of a gas comprising a hydrocarbon and/or a hydrocarbon halide in a porous synthesized silica glass body so as to provide a mole ratio of carbon to silicon dioxide of from 1 to 3, and
heat-treating the same at a temperature of from 1600°C to 2500°C.

## Patentansprüche

1. Verfahren zur Herstellung eines Komplexes auf Siliciumcarbidbasis, umfassend den Schritt:
Abscheiden von mittels Pyrolyse eines einen Kohlenwasserstoff und/oder ein Kohlenwasserstoffhalogenid umfassenden Gases erzeugtem Kohlenstoff in einem porösen, synthetisierten Silicaglaskörper.

2. Verfahren zur Herstellung eines Siliciumdioxid-Kohlenstoff-Komplexes, umfassend den Schritt:
Abscheiden von mittels Pyrolyse eines einen Kohlenwasserstoff und/oder ein Kohlenwasserstoffhalogenid umfassenden Gases erzeugtem Kohlenstoff in einem porösen, synthetisierten Silicaglaskörper, um so ein Molverhältnis von Kohlenstoff zu Siliciumdioxid von 3 oder mehr vorzusehen.

3. Verfahren nach Anspruch 2, wobei die angewandte Pyrolysetemperatur im Bereich von der Zersetzungstemperatur des Kohlenwasserstoff- oder des Kohlenwasserstoffhalogenidgases bis 1400°C liegt.

4. Verfahren zur Herstellung eines Komplexes auf Siliciumcarbidbasis, umfassend den Schritt:
Warmebehandeln des Siliciumdioxid-Kohlenstoff-Komplexes nach dem Verfahrengemäß Anspruch 2 oder Anspruch 3 bei einer Temperatur von 1600°C bis 2500°C.

5. Verfahren zur Herstellung eines Siliciumcarbidmaterials, umfassend die Schritte:
Abscheiden von mittels Pyrolyse eines einen Kohlenwasserstoff und/oder ein Kohlenwasserstoffhalogenid umfassenden Gases erzeugtem Kohlenstoff in einem porösen, synthetisierten Silicaglaskörper,
Wärmebehandeln desselbigen, um einen porösen Formkörper zu erhalten,
Befüllen der Poren des porösen Formkörpers mit metallischem Silicium.

6. Verfahren nach Anspruch 5, wobei das Molverhältnis von in dem porösen, synthetisierten Silicaglaskörper abgeschiedenem Kohlenstoff zu Siliciumdioxid 3 oder mehr beträgt.

7. Verfahren nach Anspruch 5 oder Anspruch 6, wobei das Verfahren weiterhin den folgenden Schritt umfaßt:,
Umsetzen von in dem porösen Formkörper vorliegendem, überschüssigen Kohlenstoff mit dem eingefüllten metallischen Silicium.

8. Verfahren nach Anspruch 5 oder Anspruch 6, wobei das Befüllen der Poren des porösen Formkörpers mit metallischem Silicium mittels Infiltration von geschmolzenem Silicium erreicht wird.

9. Verfahren nach Anspruch 7, wobei das Befüllen der Poren des porösen Formkörpers mit metallischem Silicium mittels Infiltration von geschmolzenem Silicium erzielt wird.

10. Verfahren nach Anspruch 5 oder Anspruch 6, wobei das Befüllen der Poren des porösen Formkörpers mit metallischem Silicium mittels Pyrolyse eines Silicium beinhaltenden Gases erzielt wird.

11. Verfahren nach Anspruch 7, wobei das Befüllen der Poren des porösen Formkörpers mittels Pyrolyse eines Silicium beinhaltenden Gases erzielt wird.

12. Verfahren zur Herstellung eines Siliciumcarbidrohrs, umfassend die Schritte:
Bilden eines porösen Körpers aus Silicaglas mittels Dampfphasensynthese auf der Oberfläche eines rohrförmigen Materials,
Abscheiden von mittels Pyrolyse eines einen Kohlenwasserstoff und/oder ein Kohlenwasserstoffhalogenid umfassenden Gases erzeugtem Kohlenstoff in dem porösen Körper aus Silicaglas, um so ein Molverhältnis von Kohlenstoff zu Siliciumdioxid von 3 oder mehr vorzusehen, und Wärmebehandeln desselbigen.

13. Verfahren nach Anspruch 12, wobei die Wärmebehandlungstemperatur 1600°C bis 2500°C betragt.

14. Verfahren nach Anspruch 12 oder Anspruch 13, wobei das Verfahren weiterhin folgenden Schritt umfaßt:
Befüllen des porösen Siliciumcarbidrohrs mit metallischem Silicium.

15. Verfahren zur Herstellung eines Komplexes auf Siliciumcarbidbasis, umfassend die Schritte:
Aneinanderfügen eines synthetisierten, porösen Silicaglaskörpers an der Verbindungsebene,
Abscheiden von mittels Pyrolyse eines einen Kohlenwasserstoff und/oder ein Kohlenwasserstoffhalogenid umfassenden Gases erzeugtem Kohlenstoff in dem porösen Körper und der Ebene, um so ein Molverhältnis von Kohlenstoff zu Siliciumdioxid von 3,5 oder mehr vorzusehen,
Wärmebehandeln desselbigen, um einen porösen Siliciumcarbidformkörper zu erhalten, und
Befüllen des porösen Siliciumcarbid-Formkörpers mit metallischem Silicium.

16. Verfahren zur Herstellung eines Komplexes auf Siliciumcarbidbasis, umfassend die Schritte:
Abscheiden von mittels Pyrolyse eines einen Kohlenwasserstoff und/oder ein Kohlenwasserstoffhalogenid umfassenden Gases erzeugtem Kohlenstoff in einem porösen, synthetisierten Silicaglaskörper, um so ein Molverhältnis von Kohlenstoff zu Siliciumdioxid von 3,5 oder mehr vorzusehen, um einen porösen Siliciumdioxid-Kohlenstoff-Formkörper zu erhalten,
Aneinanderfügen des porösen Formkörpers an der Verbindungsebene, Wärmebehandeln desselbigen, um einen porösen Siliciumcarbid-Formkörper zu erhalten, und
Befüllen des porösen Siliciumcarbid-Formkörpers mit metallischem Silicium.

17. Verfahren zur Herstellung eines Komplexes auf Siliciumcarbidbasis, umfassend die Schritte:
Abscheiden von mittels Pyrolyse eines einen Kohlenwasserstoff und/oder ein Kohlenwasserstoffhalogenid umfassenden Gases erzeugtem Kohlenstoff in einem porösen, synthetisierten Silicaglaskörper, um so ein Molverhältnis von Kohlenstoff zu Siliciumdioxid von 3,5 oder mehr vorzusehen,
Wärmebehandeln desselbigen, um einen porösen Siliciumcarbid-Formkörper zu erhalten,
Aneinanderfügen des porösen Siliciumcarbid-Formkörpers an der Verbindungsebene, und
Befüllen desselbigen mit metallischem Silicium.

18. Verfahren zur Herstellung eines Siliciumdioxid-Kohlenstoff-Komplexes, umfassend die Schritte:
Abscheiden von mittels Pyrolyse eines einen Kohlenwasserstoff und /oder ein Kohlenwasserstoffhalogenid umfassenden Gases erzeugtem Kohlenstoff in einem porösen, synthetisierten Silicaglaskörper, um so ein Molverhältnis von Kohlenstoff zur Siliciumdioxid von 1 oder weniger vorzusehen, um einen porösen Siliciumdioxid-Kohlenstoff-Komplex zu erhalten, und
Verdichten desselbigen durch Wärmebehandeln bei der Temperatur von 1200°C bis 1600°C.

19. Verfahren zur Herstellung eines Silicumdioxid-Siliciumcarbid-Komplexes, umfassend die Schritte:
Abscheiden von mittels Pyrolyse eines einen Kohlenwasserstoff und/oder ein Kohlenwasserstoffhalogend umfassenden Gases erzeugtem Kohlenstoff in einem porösen, synthetisierten Silicaglaskörper, um so ein Molverhältnis von Kohlenstoff zu Siliciumdioxid von 1 oder weniger vorzusehen, um einen porösen Siliciumdioxid-Kohlenstoff-Komplex zu erhalten, und
Erzeugung von Siliciumcarbid mittels einer Wärmebehandlung desselbigen bei einer Temperatur von 1600°C bis 2000°C.

20. Verfahren zur Herstellung eines Rohrs aus einem Siliciumdioxid-Siliciumcarbid-Komplex, umfassend die Schritte:
Bilden eines porösen Körpers aus Silicaglas mittels Dampfphasensynthese auf der Oberfläche eines rohrförmigen Materials,
Abscheiden von mittels Pyrolyse eines einen Kohlenwasserstoff und/oder ein Kohlenwasserstoffhalogenid umfassenden Gases erzeugtem Kohlenstoff in dem porösen Körper aus Silicaglas, um so ein Molverhältnis von Kohlenstoff zu Siliciumdioxid von 1 oder weniger vorzusehen, und
Wärmebehandeln desselbigen bei einer Temperatur von 1600°C bis 2000°C.

21. Verfahren zur Herstellung eines Siliciumcarbidpulvers, umfassend die Stufen:
Abscheiden von mittels Pyrolyse eines einen Kohlenwasserstoff und/oder ein Kohlenwasserstoffhalogenid umfassenden Gases erzeugtem Kohlenstoff in einem porösen, synthetisierten Silicaglaskörper, um so ein Molverhältnis von Kohlenstoff zu Siliciumdioxid von 1 bis 3 vorzusehen, und
Wärmebehandeln desselben bei einer Temperatur von 1600°C bis 2500°C.

## Revendications

1. Procédé de production d'un matériau complexe à base de carbure de silicium, selon lequel :
on dépose du carbone produit par pyrolyse d'un gaz comprenant un hydrocarbure et/ou un halogénure dérivé d'hydrocarbure, dans un corps de verre de silice synthétique, poreux.

2. Procédé de production d'un matériau complexe à base de dioxyde de silicium et de carbone, selon lequel :
on dépose du carbone produit par pyrolyse d'un gaz comprenant un hydrocarbure et/ou un halogénure dérivé d'hydrocarbure, dans un corps de verre de silice synthétique, poreux, de façon à obtenir un rapport molaire de carbone au dioxyde de silicium de 3 ou plus.

3. Procédé selon la revendication 2, dans lequel la température de pyrolyse employée varie de la température de décomposition de l'hydrocarbure ou de l'halogénure dérivé d'hydrocarbure, gazeux, jusqu'à 1.400 °C.

4. Procédé de production d'un matériau complexe à base de carbure de silicium, selon lequel :
on traite à chaud le complexe à base de dioxyde de silicium et de carbone obtenu selon le procédé de la revendication 2 ou 3, à une température de 1600 à 2500 °C.

5. Procédé de production d'un matériau à base de carbure de silicium, selon lequel :
on dépose du carbone produit par pyrolyse d'un gaz comprenant un hydrocarbure et/ou un halogénure dérivé d'hydrocarbure, dans un corps de verre de silice synthétique, poreux,
on traite à chaud ce dernier pour obtenir un moulage poreux, et
on charge les pores de ce moulage poreux avec du silicium métallique.

6. Procédé selon la revendication 5, dans lequel le rapport molaire du carbone déposé dans le corps de verre de silice synthétique poreux, au dioxyde de carbone, est de 3 ou plus.

7. Procédé selon la revendication 5 ou 6, selon lequel :
on fait réagir le carbone en excès présent dans le moulage poreux, avec le silicium métallique chargé.

8. Procédé selon la revendication 5 ou 6, dans lequel le chargement des pores du moulage poreux avec du silicium métallique, est effectuée par infiltration de silicium fondu.

9. Procédé selon la revendication 7, dans lequel le chargement des pores du moulage poreux avec du silicium métallique, est effectuée par infiltration de silicium fondu.

10. Procédé selon la revendication 5 ou 6, dans lequel le changement des pores du moulage poreux avec du silicium métallique, est effectuée par pyrolyse d'un gaz comprenant du silicium.

11. Procédé selon la revendication 7, dans lequel le chargement des pores du moulage poreux avec du silicium métallique, est effectuée par pyrolyse d'un gaz comprenant du silicium.

12. Procédé de production d'un tube à base de carbure de silicium, selon lequel :
on forme un corps poreux de verre de silice, par synthèse en phase vapeur sur la surface d'un matériau tubulaire,
on dépose du carbone produit par pyrolyse d'un gaz comprenant un hydrocarbure et/ou un halogénure dérivé d'hydrocarbure, dans le corps poreux de verre de silice, de façon à obtenir un rapport molaire du carbone au dioxyde de silicium, de 3 ou plus, et on le traite à chaud.

13. Procédé selon la revendication 12, dans lequel la température thermique est de 1.600 °C à 2.500 °C.

14. Procédé selon la revendication 12 ou 13, selon lequel :
on charge le tube à base de carbure de silicium poreux avec du silicium métallique.

15. Procédé de production d'un matériau complexe à base de carbure de silicium, selon lequel :
on assemble un corps poreux de verre de silice synthétique au niveau d'un plan de jonction ;
on dépose du carbone produit par pyrolyse d'un gaz comprenant un hydrocarbure et/ou un halogénure dérivé d'hydrocarbure, dans ce corps poreux et sur le plan, de façon à obtenir un rapport molaire de carbone au dioxyde de silicium, de 3,5 ou plus,
on le traite à chaud pour obtenir un moulage poreux à base de carbure de silicium, et
on charge ce moulage poreux à base de carbure de silicium, avec du silicium métallique.

16. Procédé de production d'un matériau complexe à base de carbure de silicium, selon lequel :
on dépose du carbone produit par pyrolyse d'un gaz comprenant un hydrocarbure et/ou un halogénure dérivé d'hydrocarbure, dans un corps de verre de silice poreux synthétique, de façon à procurer un rapport molaire du carbone au dioxyde de silicium de 3,5 ou plus, pour obtenir un moulage poreux à base de dioxyde de silicium et de carbone,
on assemble ce moulage poreux au niveau d'un plan de jonction, on le traite à chaud pour obtenir un moulage poreux à base de carbure de silicium, et
on charge ce moulage poreux à base de carbure de silicium, avec du silicium métallique.

17. Procédé de production d'un matériau complexe à base de carbure de silicium, selon lequel :
on dépose du carbone produit par pyrolyse d'un gaz comprenant un hydrocarbure et/ou un halogénure dérivé d'hydrocarbure, dans un corps de verre de silice poreux synthétique, de façon à procurer un rapport molaire du carbone au dioxyde de silicium de 3,5 ou plus,
on le traite à chaud pour obtenir un moulage à base de carbure de silicium poreux,
on assemble ce moulage à base de carbure de silicium au niveau d'un plan de jonction, et
on le charge avec du silicium métallique.

18. Procédé de production d'un matériau complexe à base de dioxyde de silicium et de carbone, selon lequel :
on dépose du carbone produit par pyrolyse d'un gaz comprenant un hydrocarbure et/ou un halogénure dérivé d'hydrocarbure, dans un corps de verre de silice synthétique poreux, de façon à procurer un rapport molaire du carbone au dioxyde de silicium de 1 au moins, pour obtenir un matériau complexe poreux à base de carbone et de dioxyde de silicium, et
on le densifie par traitement thermique à une température de 1.200 °C à 1.600 °C.

19. Procédé de production d'un matériau complexe à base de dioxyde de silicium et de carbure de silicium, selon lequel :
on dépose du carbone produit par pyrolyse d'un gaz comprenant un hydrocarbure et/ou un halogénure dérivé d'hydrocarbure, dans un corps de verre de silice poreux synthétique, de façon à procurer un rapport molaire de carbone en dioxyde de silicium de 1 ou moins, pour obtenir un matériau complexe poreux à base de dioxyde de silicium et de carbone, et
on génère du carbure de silicium en le traitant à chaud, à une température de 1.600 °C à 2.000 °C.

20. Procédé de production d'un tube complexe à base de dioxyde de silicium et de carbure de silicium, selon lequel :
on forme un corps poreux de verre de silice, par synthèse en phase vapeur, sur la surface d'un matériau tubulaire,
on dépose du carbone produit par pyrolyse d'un gaz comprenant un hydrocarbure et/ou un halogénure dérivé d'hydrocarbure, dans le corps poreux de verre de silice, de façon à procurer un rapport molaire du carbone au dioxyde de silicium de 1 ou moins, et
on le traite à chaud à une température de 1.600 °C à 2.000 °C.

21. Procédé de production d'une poudre de carbure de silicium, selon lequel :
on dépose du carbone par pyrolyse d'un gaz comprenant un hydrocarbure et/ou un halogénure dérivé d'hydrocarbure, dans un corps de verre de silice poreux synthétique, de façon à procurer un rapport molaire du carbone au dioxyde de silicium de 1 à 3, et
on le traite à chaud, à une température de 1.600 °C à 2.500 °C.
